# EUROPEAN PATENT APPLICATION

(11) **EP 4 589 324 A1**
(43) Date of publication of application: **23.07.2025**
(21) Application number: 23875208.3
(22) Date of filing: 04.10.2023
(51) Int. Cl.: G01S 5/02, G06N 3/08, H04W 64/00

(54) **METHOD AND DEVICE FOR ESTIMATING LOCATION BY USING ULTRA-WIDEBAND COMMUNICATION SIGNAL**

(30) Priority: 06.10.2022 KR 20220128171
(71) Applicant: Samsung Electronics Co., Ltd., Suwon-si, Gyeonggi-do 16677 (KR)
(72) Inventor: CHOI, Junyoung, Suwon-si Gyeonggi-do 16677 (KR); BHATTACHARYA, Sagnik, Suwon-si Gyeonggi-do 16677 (KR)
(74) Representative: Gulde & Partner
(86) International application number: PCT/KR2023/015244
(87) International publication number: WO 2024/076145

(57) **Abstract**

The present disclosure provides a method by which an electronic device determines the location of an ultra-wideband (UWB) signal. The method of the present disclosure may comprise the steps of: identifying, on the basis of a line of sight (LOS) probability for multiple received UWB signals, a preconfigured number of UWB signals from the multiple received UWB signals; obtaining the location of the electronic device by using the identified UWB signals; determining whether the obtained location is within an area of a cluster configured by UWB anchors transmitting the identified UWB signals; and determining, if the obtained location is within the area of the cluster, the obtained location as the final location of the electronic device. Here, each of the multiple received UWB signals may include a UWB message for downlink-time difference of arrival (DL-TDoA) positioning.

## Description

### [Technical Field]

The disclosure relates to a method and device for estimating a location using a UWB signal.

### [Background Art]

The Internet, which is a human centered connectivity network where humans generate and consume information, is now evolving to the Internet of things (IoT) where distributed entities, such as things, exchange and process information. The Internet of everything (IoE), which is a combination of the IoT technology and the big data processing technology through a connection with a cloud server, etc. has emerged. As technology elements, such as "sensing technology", "wired/wireless communication and network infrastructure", "service interface technology", and "security technology" have been demanded for IoT implementation. Recently, a sensor network, a machine-to-machine (M2M) communication, machine type communication (MTC), and so forth have been researched.

Such an IoT environment may provide intelligent Internet technology (IT) services that create a new value to human life by collecting and analyzing data generated among connected things. IoT may be applied to a variety of fields including smart home, smart building, smart city, smart car or connected cars, smart grid, health care, smart appliances and advanced medical services through convergence and combination between existing information technology (IT) and various industrial applications.

### [Detailed Description of the Invention]

### [Technical Problem]

The disclosure provides a method of classifying a UWB signal as a line of sight (LOS)/non-LOS (NLOS) signal, and estimating a location based on a classification result.

### [Technical Solution]

According to various embodiments of the disclosure, a method of an electronic device may include an operation of identifying a predetermined number of UWB signals from among a plurality of received UWB signals, based on line of sight (LOS) probabilities of the plurality of received ultra-wideband (UWB) signals, an operation of obtaining a location of the electronic device by using the identified UWB signals, an operation of determining whether the obtained location is within an area of a cluster configured with UWB anchors that transmit the identified UWB signals, and an operation of determining the obtained location as a final location of the electronic device when the obtained location is within the area of the cluster, and each of the plurality of received UWB signals may include a UWB message for DL-TDoA positioning.

According to various embodiments of the disclosure, an electronic device may include a transceiver and a controller connected to the transceiver, and the controller may be configured to identify a predetermined number of UWB signals from among a plurality of received UWB signals, based on line of sight (LOS) probabilities for the plurality of received UWB signals, to obtain a location of the electronic device by using the identified UWB signals, to determine whether the obtained location is within an area of a cluster configured with UWB anchors that transmit the identified UWB signals, and to determine the obtained location as a final location of the electronic device when the obtained location is within the area of the cluster, and each of the plurality of received UWB signals may include a UWB message for DL-TDoA positioning.

### [Advantageous Effects]

According to a method of the disclosure, the accuracy of location estimation may be increased.

### [Brief Description of Drawings]

FIG. 1 is a block diagram schematically illustrating an electronic device;
FIG. 2A is a diagram illustrating an architecture of a UWB device according to an embodiment of the disclosure;
FIG. 2B is a diagram illustrating a configuration of a framework of a UWB device according to an embodiment of the disclosure;
FIG. 3A is a diagram illustrating a structure of a UWB MAC frame according to an embodiment of the disclosure;
FIG. 3B is a diagram illustrating a structure of a UWB PHY packet according to an embodiment of the disclosure;
FIG. 4 is a diagram illustrating an example of a cluster configured with a plurality of UWB anchors according to an embodiment of the disclosure;
FIG. 5A is a diagram illustrating a method of performing UWB ranging based on a DL-TDoA scheme by a UWB device according to an embodiment of the disclosure;
FIG. 5B is a diagram illustrating an example of a ranging block structure for a downlink TDoA scheme according to an embodiment of the disclosure;
FIG. 6A is a diagram illustrating an example of UWB CIR data according to an embodiment of the disclosure;
FIG. 6B is a diagram illustrating an example of effective UWB CIR data according to an embodiment of the disclosure;
FIG. 6C is a diagram illustrating an example of an LOS signal and an NLOS signal classified using UWB CIR data according to an embodiment of the disclosure;
FIG. 7 is a diagram illustrating a training procedure and a deployment procedure for LOS/NLOS signal classification using UWB channel impulse response data according to an embodiment of the disclosure;
FIG. 8 is a diagram illustrating a configuration of a user device for LOS/NLOS classification according to an embodiment of the disclosure;
FIG. 9A is a diagram illustrating an example of a DL-TDoA positioning environment according to an embodiment of the disclosure;
FIG. 9B is a diagram illustrating an example of LOS probability data for a UWB signal obtained in the DL-TDoA positioning environment of FIG. 9A;
FIG. 10A is a flowchart illustrating a method of performing DL-TDoA positioning according to an embodiment of the disclosure;
FIGS. 10B, 10C, and 10D are diagrams illustrating examples of a cluster configured according to a method of performing DL-TDoA positioning of FIG. 10A;
FIG. 11A is a flowchart illustrating a method of performing DL-TDoA positioning according to an embodiment of the disclosure;
FIGS. 11B, 11C, and 11D are diagrams illustrating examples of a cluster configured according to a method of performing DL-TDoA positioning of FIG. 11A;
FIG. 12A is a flowchart illustrating a method of performing DL-TDoA positioning according to an embodiment of the disclosure;
FIG. 12B is a diagram illustrating an example of a cluster configured according to a method of performing DL-TDoA positioning of FIG. 12A; and
FIG. 13 is a diagram illustrating a structure of an electronic device according to an embodiment of the disclosure.

### [Mode for Carrying out the Invention]

Hereinafter, embodiments of the disclosure will be described in detail with reference to the accompanying drawings.

In describing the embodiments, descriptions related to technical contents well-known in the relevant art and not associated directly with the disclosure will be omitted. Such an omission of unnecessary descriptions is intended to prevent obscuring of the main idea of the disclosure and more clearly transfer the main idea.

For the same reason, in the accompanying drawings, some elements may be exaggerated, omitted, or schematically illustrated. Furthermore, the size of each element does not completely reflect the actual size. In the respective drawings, the same or corresponding elements are assigned the same reference numerals.

The advantages and features of the disclosure and ways to achieve them will be apparent by making reference to embodiments as described below in detail in conjunction with the accompanying drawings. However, the disclosure is not limited to the embodiments set forth below, but may be implemented in various different forms. The following embodiments are provided only to completely disclose the disclosure and inform those skilled in the art of the scope of the disclosure, and the disclosure is defined only by the scope of the appended claims. Throughout the specification, the same or like reference signs indicate the same or like elements.

Herein, it will be understood that each block of the flowchart illustrations, and combinations of blocks in the flowchart illustrations, can be implemented by computer program instructions. These computer program instructions can be provided to a processor of a general-purpose computer, special purpose computer, or other programmable data processing apparatus to produce a machine, such that the instructions, which execute via the processor of the computer or other programmable data processing apparatus, create means for implementing the functions specified in the flowchart block or blocks. These computer program instructions may also be stored in a computer usable or computer-readable memory that can direct a computer or other programmable data processing apparatus to function in a particular manner, such that the instructions stored in the computer usable or computer-readable memory produce an article of manufacture including instruction means that implement the function specified in the flowchart block or blocks. The instructions which execute on a computer or other programmable data processing apparatus to cause a series of operational steps to be performed on the computer or other programmable data processing apparatus to produce a computer implemented process may provide steps for implementing the functions specified in the flowchart block(s).

Furthermore, each block in the flowchart illustrations may represent a module, segment, or portion of code, which includes one or more executable instructions for implementing the specified logical function(s). It should also be noted that in some alternative implementations, the functions noted in the blocks may occur out of the order. For example, two blocks shown in succession may in fact be executed substantially concurrently or the blocks may sometimes be executed in the reverse order, depending upon the functionality involved.

As used in embodiments of the disclosure, the term "unit" refers to a software element or a hardware element, such as a field programmable gate array (FPGA) or an application specific integrated circuit (ASIC), and the "unit" may perform certain functions. However, the "unit" does not always have a meaning limited to software or hardware. The "unit" may be constructed either to be stored in an addressable storage medium or to execute one or more processors. Therefore, the "unit" includes, for example, software elements, object-oriented software elements, class elements or task elements, processes, functions, properties, procedures, sub-routines, segments of a program code, drivers, firmware, micro-codes, circuits, data, database, data structures, tables, arrays, and parameters. The elements and functions provided by the "unit" may be either combined into a smaller number of elements, or a "unit", or divided into a larger number of elements, or a "unit". Moreover, the elements and "units" may be implemented to reproduce one or more CPUs within a device or a security multimedia card. Furthermore, according to some embodiments, the "unit" may include one or more processors.

As used herein, the term "terminal" or "device" may also be referred to as a mobile station (MS), a user equipment (UE), a user terminal (UT), a wireless terminal, an access terminal (AT), a terminal, a subscriber unit, a subscriber station (SS), a wireless device, a wireless communication device, a wireless transmit/receive unit (WTRU), a mobile node, a mobile, or other terms. Various example of the terminal may include a cellular phone, a smartphone having a wireless communication function, a personal digital assistant (PDA) having a wireless communication function, a wireless modem, a portable computer having a wireless communication function, a photographing device, such as a digital camera, having a wireless communication function, a gaming device having a wireless communication function, a music storage and reproduction home appliance having a wireless communication function, an Internet home appliance capable of wireless Internet access and browsing, and portable units or terminals having integrated combinations of the above functions. Furthermore, the terminal may include a machine to machine (M2M) terminal, and a machine type communication (MTC) terminal/device, but is not limited thereto. In the specification, the terminal may also be referred to as an electronic device or simply as a device.

Hereinafter, the operation principle of the disclosure will be described in detail in conjunction with the accompanying drawings. In the following description of the disclosure, a detailed description of known functions or configurations incorporated herein will be omitted when it is determined that the description may make the subject matter of the disclosure unnecessarily unclear. The terms which will be described below are terms defined in consideration of the functions in the disclosure, and may be different according to users, intentions of the users, or customs. Therefore, the definitions of the terms should be made based on the contents throughout the specification.

Hereinafter, embodiments of the disclosure will be described in detail in conjunction with the accompanying drawings. In the following description of embodiments of the disclosure, a communication system using a UWB will be described by way of example, but the embodiments of the disclosure may be applied to other communication systems having similar technical backgrounds or characteristics. Examples of such communication systems may include communication systems Bluetooth or ZigBee. Therefore, based on determinations by those skilled in the art, the embodiments of the disclosure may be applied to other communication systems through some modifications without significantly departing from the scope of the disclosure.

Also, in describing the disclosure, a detailed description of known functions or configurations incorporated herein will be omitted when it is determined that the description may make the subject matter of the disclosure unnecessarily unclear. The terms which will be described below are terms defined in consideration of the functions in the disclosure, and may be different according to users, intentions of the users, or customs. Therefore, the definitions of the terms should be made based on the contents throughout the specification.

Generally, wireless sensor network technology is classified as wireless local area network (WLAN) technology and wireless personal area network (WPAN) technology, briefly, based on a recognition distance. In this instance, WLAN is technology based on IEEE 802.11, and enables access to a backbone network within a radius of approximately 100m. WPAN is technology based on IEEE 802.15, and includes Bluetooth, ZigBee, ultra wide band (UWB) communication, or the like. A wireless network in which those wireless network technologies are embodied may include a plurality of electronic devices.

According to the definition by federal communications commission (FCC), UWB is wireless communication technology that uses a bandwidth of 500MHz or more, or of which least 20% of the bandwidth corresponds to a central frequency. UWB may be a bandwidth itself to which UWB communication is applied. UWB allows secure and accurate ranging between devices. Through the above, UWB may enable relative location estimation based on a distance between two devices, or may enable accurate location estimation of a device based on distances from stationary devices (of which locations are known).

Predetermined terms used in the descriptions provided below are to help understanding of the disclosure, and those terms may be changed to others without departing from the scope of technical idea of the disclosure.

"Application dedicated file (ADF)", for example, may be a data structure in an application data structure that is capable of hosting an application or application specific data.

"Application protocol data unit (APDU)" may be a command and a response used in the case of communication with an application data structure in a UWB device.

"Application specific data", for example, may be a file structure having a root level and an application level including UWB control information and UWB session data required for a UWB session.

"Controller" may be a ranging device that defines and controls ranging control messages (RCM) (or control messages). The controller may define and control ranging features by transmitting a control message.

"Controlee" may be a ranging device that uses a ranging parameter in an RCM (or control message) received from a controller. The controlee may use ranging features which are the same as those configured by the controller via a control message.

"Dynamic scrambled timestamp sequence (STS) mode" may be an operation mode in which an STS is not repeated during a ranging session, unlike "static STS". In this mode, an STS is managed by a ranging device, and a ranging session key that generates an STS may be managed by a secure component.

"Applet", for example, may be an applet executed in a secure component including UWB parameters and service data. The applet may be a FiRa applet.

"Ranging device" may be a device capable of performing UWB ranging. In the disclosure, the ranging device may be an enhanced ranging device (ERDEV) or a FiRa device defined by IEEE 802.15.4z. The ranging device may be referred to as a UWB device.

"UWB-enabled application" may be an application for a UWB service. For example, the UWB-enabled application may be an application that uses a framework API for configuring an OOB connector, a secure service, and/or a UWB service for a UWB session. "UWB-enabled application" may be referred to as an application or a UWB application for short. The UWB-enabled application may be a FiRa-enabled application.

"Framework" may be a component that enables access to a profile, and provides an individual UWB configuration and/or notification. The framework may be a collection of logical software components including, for example, a profile manager, an OOB connector, a secure service, and/or a UWB service. The framework may be a FiRa framework.

"OOB connector" may be a software component for configuring an out-of-band (OOB) connection (e.g., BLE connection) between ranging devices. The OOB connector may be a FiRa OOB connector.

"Profile" may be a predefined set of UWB and OOB configuration parameters. The profile may be a FiRa profile.

"Profile manager" may be a software component that embodies a profile usable in a ranging device. The profile manager may be a FiRa profile manager.

"Service" may be implementation of a use case that provides a service to an end-user.

"Smart ranging device" may be a ranging device capable of embodying an optional framework API. The smart ranging device may be a FiRa smart device.

"Global dedicated file (GDF)" may be a root level of application specific data including data needed for configuring a USB session.

"Framework API" may be an API used by a UWB-enabled application for communication with a framework.

"Initiator" may be a ranging device that initiates ranging exchange. The initiator may initiate ranging exchange by transmitting a first RFRAME (ranging exchange message).

"Object identifier (OID)" may be an identifier of an ADF in an application data structure.

"Out-of-band (OOB)" may be data communication that is underlying wireless technology and does not use UWB.

"Ranging data set (RDS)" may be data (e.g., UWB session key, session ID, or the like) required for configuring a UWB session in which confidentiality, authenticity, and integrity need to be protected.

"Responder" may be a ranging device that responds to an initiator in ranging exchange. The responder may respond to a ranging exchange message received from the initiator.

"STS" may be a ciphered sequence to increase integrity and accuracy of ranging measurement timestamps. The STS may be generated from a ranging session key.

"Secure channel" may be a data channel that prevents overhearing and tampering.

"Secure component", for example, may be an entity (e.g., secure element (SE) or trusted execution environment (TEE)) that has a defined security level and interfaces with a UWBS for the purpose of providing an RDS to the UWBS, in the case in which a dynamic STS is used.

"SE" may be a tamper-resistant secure hardware component that may be used as a secure component in a ranging device.

"Secure ranging" may be ranging based on an STS generated via a strong encryption operation.

"Secure service" may be a software component for interfacing with a secure component such as a secure element or TEE.

"Service applet" may be an applet in a secure component that manages a service specific transaction.

"Service data" may be data which is defined by a service provider and needs to be transferred between two ranging devices to implement a service.

"Service provider" may be an entity that defines and provides hardware and software required for providing a predetermined service to an end-user.

"Static STS mode" may be an operation mode in which an STS is repeated during a session, and may not need to be managed by a secure component.

"Secure UWB service (SUS) applet" may be an applet in an SE, communicating with an applet, in order to search for data needed to enable a secure UWB session with another ranging device. In addition, the SUS applet may transfer the corresponding data (information) to the UWBS.

"UWB service" may be a software component that provides access to a UWBS.

"UWB session" may be a period of time from a start of communication between a controller and a controlee via UWB to an end. The UWB session may include ranging, data transferring, or both ranging and data transferring.

"UWB session ID" may be an ID (e.g., 32-bit integer number) that identifies a UWB session, and is shared between a controller and a controlee.

"UWB session key" may be a key used to protect a UWB session. The UWB session key may be used for generating an STS. The UWB session key may be a UWB ranging session key (URSK), and may be referred to as a session key.

"UWB subsystem (UWBS)" may be a hardware component that embodies UWB PHY and MAC layers (spec). The UWBS may have an interface to a framework and an interface to a secure component for searching for an RDS.

"UWB message" may be a message including a payload IE transmitted by a UWB device (e.g., ERDEV). The UWB message, for example, may be a message such as a ranging initiation message (RIM), ranging response message (RRM), ranging final message (RFM), control message (CM), measurement report message (MRM), ranging result report message (RRRM), control update message (CUM), or one-way ranging (OWR) message. When needed, a plurality of messages may be combined into a single message.

"OWR" may be a ranging scheme that uses messages transmitted in one direction between a ranging device and one or more other ranging devices. The OWR may be used for measuring a time difference of arrival (TDoA). In addition, the OWR may be used for measuring an AoA by a reception side, as opposed to measuring a TDoA. In this instance, a pair of an advertiser and an observer may be used.

"TWR" may be a ranging scheme that measures a time of flight (ToF) by exchanging a ranging message between two devices, and estimates a relative distance between the two devices. The TWR scheme may be one of a double-sided two-way ranging (DS-TWR) and a single-sided two-way ranging (SS-TWR). The SS-TWR may be a procedure that performs ranging by performing round-trip time measurement once. For example, SS-TWR may include an RIM transmission operation from an initiator to a responder and an RRM transmission operation from the responder to the initiator. The DS-TWR may be a procedure that performs ranging by performing round-trip time measurement twice. For example, DS-TWR may include an RIM transmission operation from an initiator to a responder, an RRM transmission operation from the responder to the initiator, and an RFM transmission operation from the initiator to the responder. Via the ranging exchange (ranging message exchange), a time of flight (ToF) may be calculated, and a distance between two devices may be estimated. In the TWR process, measured AoA information (e.g., AoA azimuth result, AoA elevation result) may be transferred to another ranging device via an RRRM or another message. In the disclosure, the TWR may be referred to as UWB TWR.

"DL-TDoA" may be referred to as a downlink time difference of arrival (DL-TDoA) or reverse TDoA. While a plurality of anchor devices broadcast a message or exchange a message, a user device (tag device) may overhear a message of an anchor device, which is a basic operation. The DL-TDoA may be classified as a type of one way ranging, similar to an uplink TDoA. A user device that performs a DL-TDoA operation may overhear messages transmitted from two anchor devices, and may calculate a TDoA that is proportional to a difference in distances between the user device and the anchor devices. The user device may calculate a relative distance to an anchor device by using TDoAs of many pairs of anchor devices, and may use the same for positioning. An operation of an anchor device for a DL-TDoA may perform an operation similar to DS-TWR defined in IEEE 802.15.4z, and may further include another useful time information so that a user device is capable of calculating a TDoA. A DL-TDoA may be referred to as DL-TDoA localization.

"Anchor device" may be referred to as an anchor, a UWB anchor, a UWB anchor device, and may be a UWB device disposed in a predetermined location in order to provide a positioning service. For example, an anchor device may be a UWB device that a service provider installs in a wall, ceiling, structure or the like in a room in order to provide an indoor positioning service. The anchor device may be classified as an initiator anchor or a responder anchor based on an order of message transmission and a role.

"Initiator anchor" may be referred to as an initiator UWB anchor, an initiator anchor device, or the like, and may indicate initiation of a predetermined ranging round. The initiator anchor may schedule a ranging slot in which responder anchors, operating in the same ranging round, respond. An initiation message of the initiator anchor may be referred to as an initiator downlink TDoA message (initiator DTM) or a poll message. The initiation message of the initiator anchor may include a transmission timestamp. The initiator anchor may additionally transfer a termination message after receiving responses of responder anchors. The termination message of the initiator anchor may be referred to as a final DTM or final message. The termination message may include reply times with respect to messages sent by responder anchors. The termination message may include a transmission timestamp.

"Responder anchor" may be referred to as a responder UWB anchor, a responder UWB anchor device, a responder anchor device, or the like. The responder anchor may be a UWB anchor that responds to an initiation message of an initiator anchor. A message that the responder anchor sends as a response may include a reply time for an initiation message. A message that the responder anchor sends as a response may be referred to as a responder DTM, or a response message. The response message of the responder anchor may include a transmission timestamp.

"Tag device" may estimate its location (e.g., geographical coordinates) by using TDoA measurement based on a DTM received from an anchor device in DL-TDoA. The tag device may be aware of the location of an anchor device in advance. The tag device may be referred to as a UWB tag, a user device, and a UWB tag device, and a tag device of DL-TDoA may be referred to as a DL-TDoA tag or a DT-tag. The tag device may receive a message transmitted by the anchor device, and may measure a reception time of the message. The tag device may obtain geographical coordinates of the anchor device via in-band or out-band method. The tag device may skip a ranging block when a location update speed is lower than the speed supported by a network.

"Cluster" may be a set of UWB anchors that cover a predetermined area. The cluster may be configured with an initiator UWB anchor and responder UWB anchors that respond thereto. A single initiator UWB anchor and at least three responder UWB anchors are generally needed for 2D positioning, and a single initiator UWB anchor and at least four responder UWB anchors are needed for 3D positioning. If an initiator UWB anchor and a responder UWB anchor are capable of being time-synchronized (time synchronization) accurately via a separate wired/wireless connection, a single initiator UWB anchor and two responder UWB anchors are needed for 2D positioning and a single initiator UWB anchor and three responder UWB anchors are needed for 3D positioning. Unless otherwise mentioned, it is assumed that a separate wired/wireless device for time synchronization between UWB anchors does not exist. An area of a cluster may be a space of UWB anchors that constitute the cluster. A positioning service may be provided to a user device by configuring a plurality of clusters in order to support a positioning service for a wide area. A cluster may be referred to as a cell. An operation of a cluster operation may be understood as an operation of an anchor(s) belonging to the cluster.

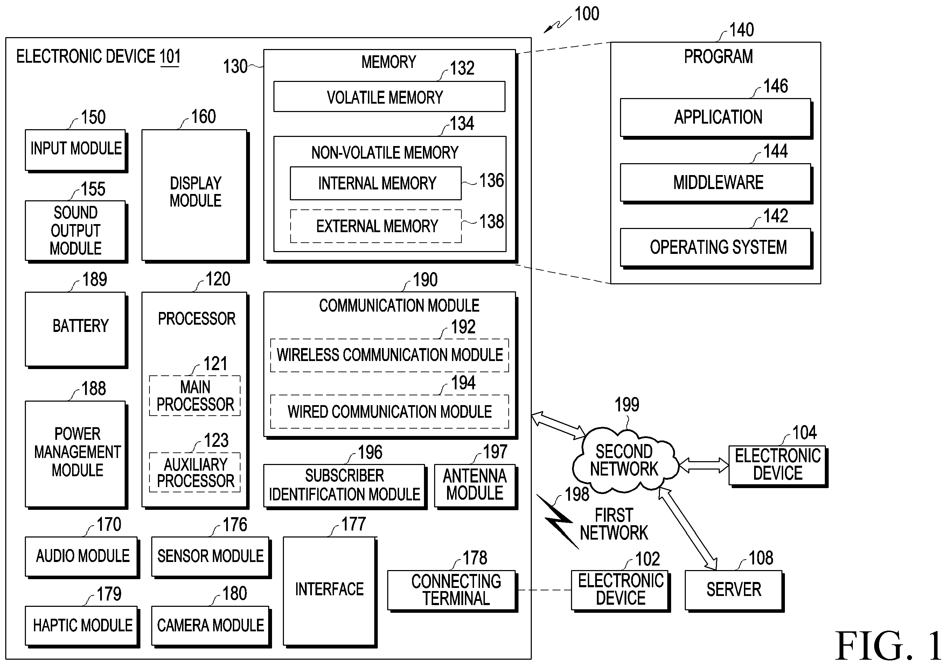

FIG. 1 is a block diagram schematically illustrating an electronic device.

Referring to FIG. 1, the electronic device 101 in the network environment 100 may communicate with an electronic device 102 via a first network 198 (e.g., a short-range wireless communication network), or at least one of an electronic device 104 or a server 108 via a second network 199 (e.g., a long-range wireless communication network). According to an embodiment, the electronic device 101 may communicate with the electronic device 104 via the server 108. According to an embodiment, the electronic device 101 may include a processor 120, memory 130, an input module 150, a sound output module 155, a display module 160, an audio module 170, a sensor module 176, an interface 177, a connecting terminal 178, a haptic module 179, a camera module 180, a power management module 188, a battery 189, a communication module 190, a subscriber identification module (SIM) 196, or an antenna module 197. In some embodiments, at least one of the components (e.g., the connecting terminal 178) may be omitted from the electronic device 101, or one or more other components may be added in the electronic device 101. In some embodiments, some of the components (e.g., the sensor module 176, the camera module 180, or the antenna module 197) may be implemented as a single component (e.g., the display module 160).

The processor 120 may execute, for example, software (e.g., a program 140) to control at least one other component (e.g., a hardware or software component) of the electronic device 101 coupled with the processor 120, and may perform various data processing or computation. According to one embodiment, as at least part of the data processing or computation, the processor 120 may store a command or data received from another component (e.g., the sensor module 176 or the communication module 190) in volatile memory 132, process the command or the data stored in the volatile memory 132, and store resulting data in non-volatile memory 134. According to an embodiment, the processor 120 may include a main processor 121 (e.g., a central processing unit (CPU) or an application processor (AP)), or an auxiliary processor 123 (e.g., a graphics processing unit (GPU), a neural processing unit (NPU), an image signal processor (ISP), a sensor hub processor, or a communication processor (CP)) that is operable independently from, or in conjunction with, the main processor 121. For example, when the electronic device 101 includes the main processor 121 and the auxiliary processor 123, the auxiliary processor 123 may be adapted to consume less power than the main processor 121, or to be specific to a specified function. The auxiliary processor 123 may be implemented as separate from, or as part of the main processor 121.

The auxiliary processor 123 may control at least some of functions or states related to at least one component (e.g., the display module 160, the sensor module 176, or the communication module 190) among the components of the electronic device 101, instead of the main processor 121 while the main processor 121 is in an inactive (e.g., sleep) state, or together with the main processor 121 while the main processor 121 is in an active state (e.g., executing an application). According to an embodiment, the auxiliary processor 123 (e.g., an image signal processor or a communication processor) may be implemented as part of another component (e.g., the camera module 180 or the communication module 190) functionally related to the auxiliary processor 123. According to an embodiment, the auxiliary processor 123 (e.g., the neural processing unit) may include a hardware structure specified for artificial intelligence model processing. An artificial intelligence model may be generated by machine learning. Such learning may be performed, e.g., by the electronic device 101 where the artificial intelligence is performed or via a separate server (e.g., the server 108). Learning algorithms may include, but are not limited to, e.g., supervised learning, unsupervised learning, semi-supervised learning, or reinforcement learning. The artificial intelligence model may include a plurality of artificial neural network layers. The artificial neural network may be a deep neural network (DNN), a convolutional neural network (CNN), a recurrent neural network (RNN), a restricted Boltzmann machine (RBM), a deep belief network (DBN), a bidirectional recurrent deep neural network (BRDNN), deep Q-network or a combination of two or more thereof but is not limited thereto. The artificial intelligence model may, additionally or alternatively, include a software structure other than the hardware structure.

The memory 130 may store various data used by at least one component (e.g., the processor 120 or the sensor module 176) of the electronic device 101. The various data may include, for example, software (e.g., the program 140) and input data or output data for a command related thereto. The memory 130 may include the volatile memory 132 or the non-volatile memory 134.

The program 140 may be stored in the memory 130 as software, and may include, for example, an operating system (OS) 142, middleware 144, or an application 146.

The input module 150 may receive a command or data to be used by another component (e.g., the processor 120) of the electronic device 101, from the outside (e.g., a user) of the electronic device 101. The input module 150 may include, for example, a microphone, a mouse, a keyboard, a key (e.g., a button), or a digital pen (e.g., a stylus pen).

The sound output module 155 may output sound signals to the outside of the electronic device 101. The sound output module 155 may include, for example, a speaker or a receiver. The speaker may be used for general purposes, such as playing multimedia or playing record. The receiver may be used for receiving incoming calls. According to an embodiment, the receiver may be implemented as separate from, or as part of the speaker.

The display module 160 may visually provide information to the outside (e.g., a user) of the electronic device 101. The display module 160 may include, for example, a display, a hologram device, or a projector and control circuitry to control a corresponding one of the display, hologram device, and projector. According to an embodiment, the display module 160 may include a touch sensor adapted to detect a touch, or a pressure sensor adapted to measure the intensity of force incurred by the touch.

The audio module 170 may convert a sound into an electrical signal and vice versa. According to an embodiment, the audio module 170 may obtain the sound via the input module 150, or output the sound via the sound output module 155 or a headphone of an external electronic device (e.g., an electronic device 102) directly (e.g., wiredly) or wirelessly coupled with the electronic device 101.

The sensor module 176 may detect an operational state (e.g., power or temperature) of the electronic device 101 or an environmental state (e.g., a state of a user) external to the electronic device 101, and then generate an electrical signal or data value corresponding to the detected state. According to an embodiment, the sensor module 176 may include, for example, a gesture sensor, a gyro sensor, an atmospheric pressure sensor, a magnetic sensor, an acceleration sensor, a grip sensor, a proximity sensor, a color sensor, an infrared (IR) sensor, a biometric sensor, a temperature sensor, a humidity sensor, or an illuminance sensor.

The interface 177 may support one or more specified protocols to be used for the electronic device 101 to be coupled with the external electronic device (e.g., the electronic device 102) directly (e.g., wiredly) or wirelessly. According to an embodiment, the interface 177 may include, for example, a high definition multimedia interface (HDMI), a universal serial bus (USB) interface, a secure digital (SD) card interface, or an audio interface.

A connecting terminal 178 may include a connector via which the electronic device 101 may be physically connected with the external electronic device (e.g., the electronic device 102). According to an embodiment, the connecting terminal 178 may include, for example, a HDMI connector, a USB connector, a SD card connector, or an audio connector (e.g., a headphone connector).

The haptic module 179 may convert an electrical signal into a mechanical stimulus (e.g., a vibration or a movement) or electrical stimulus which may be recognized by a user via his tactile sensation or kinesthetic sensation. According to an embodiment, the haptic module 179 may include, for example, a motor, a piezoelectric element, or an electric stimulator.

The camera module 180 may capture a still image or moving images. According to an embodiment, the camera module 180 may include one or more lenses, image sensors, image signal processors, or flashes.

The power management module 188 may manage power supplied to the electronic device 101. According to one embodiment, the power management module 188 may be implemented as at least part of, for example, a power management integrated circuit (PMIC).

The battery 189 may supply power to at least one component of the electronic device 101. According to an embodiment, the battery 189 may include, for example, a primary cell which is not rechargeable, a secondary cell which is rechargeable, or a fuel cell.

The communication module 190 may support establishing a direct (e.g., wired) communication channel or a wireless communication channel between the electronic device 101 and the external electronic device (e.g., the electronic device 102, the electronic device 104, or the server 108) and performing communication via the established communication channel. The communication module 190 may include one or more communication processors that are operable independently from the processor 120 (e.g., the application processor (AP)) and supports a direct (e.g., wired) communication or a wireless communication. According to an embodiment, the communication module 190 may include a wireless communication module 192 (e.g., a cellular communication module, a short-range wireless communication module, or a global navigation satellite system (GNSS) communication module) or a wired communication module 194 (e.g., a local area network (LAN) communication module or a power line communication (PLC) module). A corresponding one of these communication modules may communicate with the external electronic device via the first network 198 (e.g., a short-range communication network, such as Bluetooth^{™}, wireless-fidelity (Wi-Fi) direct, or infrared data association (IrDA)) or the second network 199 (e.g., a long-range communication network, such as a legacy cellular network, a 5G network, a next-generation communication network, the Internet, or a computer network (e.g., LAN or wide area network (WAN)). These various types of communication modules may be implemented as a single component (e.g., a single chip), or may be implemented as multi components (e.g., multi chips) separate from each other. The wireless communication module 192 may identify and authenticate the electronic device 101 in a communication network, such as the first network 198 or the second network 199, using subscriber information (e.g., international mobile subscriber identity (IMSI)) stored in the subscriber identification module 196.

The wireless communication module 192 may support a 5G network, after a 4G network, and next-generation communication technology, e.g., new radio (NR) access technology. The NR access technology may support enhanced mobile broadband (eMBB), massive machine type communications (mMTC), or ultra-reliable and low-latency communications (URLLC). The wireless communication module 192 may support a high-frequency band (e.g., the mmWave band) to achieve, e.g., a high data transmission rate. The wireless communication module 192 may support various technologies for securing performance on a high-frequency band, such as, e.g., beamforming, massive multiple-input and multiple-output (massive MIMO), full dimensional MIMO (FD-MIMO), array antenna, analog beam-forming, or large scale antenna. The wireless communication module 192 may support various requirements specified in the electronic device 101, an external electronic device (e.g., the electronic device 104), or a network system (e.g., the second network 199). According to an embodiment, the wireless communication module 192 may support a peak data rate (e.g., 20Gbps or more) for implementing eMBB, loss coverage (e.g., 164dB or less) for implementing mMTC, or U-plane latency (e.g., 0.5ms or less for each of downlink (DL) and uplink (UL), or a round trip of 1ms or less) for implementing URLLC.

The antenna module 197 may transmit or receive a signal or power to or from the outside (e.g., the external electronic device) of the electronic device 101. According to an embodiment, the antenna module 197 may include an antenna including a radiating element composed of a conductive material or a conductive pattern formed in or on a substrate (e.g., a printed circuit board (PCB)). According to an embodiment, the antenna module 197 may include a plurality of antennas (e.g., array antennas). In such a case, at least one antenna appropriate for a communication scheme used in the communication network, such as the first network 198 or the second network 199, may be selected, for example, by the communication module 190 (e.g., the wireless communication module 192) from the plurality of antennas. The signal or the power may then be transmitted or received between the communication module 190 and the external electronic device via the selected at least one antenna. According to an embodiment, another component (e.g., a radio frequency integrated circuit (RFIC)) other than the radiating element may be additionally formed as part of the antenna module 197.

According to various embodiments, the antenna module 197 may form a mmWave antenna module. According to an embodiment, the mmWave antenna module may include a printed circuit board, a RFIC disposed on a first surface (e.g., the bottom surface) of the printed circuit board, or adjacent to the first surface and capable of supporting a designated high-frequency band (e.g., the mmWave band), and a plurality of antennas (e.g., array antennas) disposed on a second surface (e.g., the top or a side surface) of the printed circuit board, or adjacent to the second surface and capable of transmitting or receiving signals of the designated high-frequency band.

At least some of the above-described components may be coupled mutually and communicate signals (e.g., commands or data) therebetween via an inter-peripheral communication scheme (e.g., a bus, general purpose input and output (GPIO), serial peripheral interface (SPI), or mobile industry processor interface (MIPI)).

According to an embodiment, commands or data may be transmitted or received between the electronic device 101 and the external electronic device 104 via the server 108 coupled with the second network 199. Each of the electronic devices 102 or 104 may be a device of a same type as, or a different type, from the electronic device 101. According to an embodiment, all or some of operations to be executed at the electronic device 101 may be executed at one or more of the external electronic devices 102, 104, or 108. For example, if the electronic device 101 should perform a function or a service automatically, or in response to a request from a user or another device, the electronic device 101, instead of, or in addition to, executing the function or the service, may request the one or more external electronic devices to perform at least part of the function or the service. The one or more external electronic devices receiving the request may perform the at least part of the function or the service requested, or an additional function or an additional service related to the request, and transfer an outcome of the performing to the electronic device 101. The electronic device 101 may provide the outcome, with or without further processing of the outcome, as at least part of a reply to the request. To that end, a cloud computing, distributed computing, mobile edge computing (MEC), or client-server computing technology may be used, for example. The electronic device 101 may provide ultra low-latency services using, e.g., distributed computing or mobile edge computing. In another embodiment, the external electronic device 104 may include an internet-of-things (IoT) device. The server 108 may be an intelligent server using machine learning and/or a neural network. According to an embodiment, the external electronic device 104 or the server 108 may be included in the second network 199. The electronic device 101 may be applied to intelligent services (e.g., smart home, smart city, smart car, or healthcare) based on 5G communication technology or IoT-related technology.

The electronic device according to various embodiments may be one of various types of electronic devices. The electronic devices may include, for example, a portable communication device (e.g., a smartphone), a computer device, a portable multimedia device, a portable medical device, a camera, a wearable device, or a home appliance. According to an embodiment of the disclosure, the electronic devices are not limited to those described above.

It should be appreciated that various embodiments of the present disclosure and the terms used therein are not intended to limit the technological features set forth herein to particular embodiments and include various changes, equivalents, or replacements for a corresponding embodiment. With regard to the description of the drawings, similar reference numerals may be used to refer to similar or related elements. It is to be understood that a singular form of a noun corresponding to an item may include one or more of the things, unless the relevant context clearly indicates otherwise. As used herein, each of such phrases as "A or B," "at least one of A and B," "at least one of A or B," "A, B, or C," "at least one of A, B, and C," and "at least one of A, B, or C," may include any one of, or all possible combinations of the items enumerated together in a corresponding one of the phrases. As used herein, such terms as "1st" and "2nd," or "first" and "second" may be used to simply distinguish a corresponding component from another, and does not limit the components in other aspect (e.g., importance or order). It is to be understood that if an element (e.g., a first element) is referred to, with or without the term "operatively" or "communicatively", as "coupled with," "coupled to," "connected with," or "connected to" another element (e.g., a second element), it means that the element may be coupled with the other element directly (e.g., wiredly), wirelessly, or via a third element.

As used in connection with various embodiments of the disclosure, the term "module" may include a unit implemented in hardware, software, or firmware, and may interchangeably be used with other terms, for example, "logic," "logic block," "part," or "circuitry". A module may be a single integral component, or a minimum unit or part thereof, adapted to perform one or more functions. For example, according to an embodiment, the module may be implemented in a form of an application-specific integrated circuit (ASIC).

Various embodiments as set forth herein may be implemented as software (e.g., the program 140) including one or more instructions that are stored in a storage medium (e.g., internal memory 136 or external memory 138) that is readable by a machine (e.g., the electronic device 101). For example, a processor (e.g., the processor 120) of the machine (e.g., the electronic device 101) may invoke at least one of the one or more instructions stored in the storage medium, and execute it, with or without using one or more other components under the control of the processor. This allows the machine to be operated to perform at least one function according to the at least one instruction invoked. The one or more instructions may include a code generated by a complier or a code executable by an interpreter. The machine-readable storage medium may be provided in the form of a non-transitory storage medium. Wherein, the term "non-transitory" simply means that the storage medium is a tangible device, and does not include a signal (e.g., an electromagnetic wave), but this term does not differentiate between where data is semi-permanently stored in the storage medium and where the data is temporarily stored in the storage medium.

According to an embodiment, a method according to various embodiments of the disclosure may be included and provided in a computer program product. The computer program product may be traded as a product between a seller and a buyer. The computer program product may be distributed in the form of a machine-readable storage medium (e.g., compact disc read only memory (CD-ROM)), or be distributed (e.g., downloaded or uploaded) online via an application store (e.g., PlayStore^{™}), or between two user devices (e.g., smart phones) directly. If distributed online, at least part of the computer program product may be temporarily generated or at least temporarily stored in the machine-readable storage medium, such as memory of the manufacturer's server, a server of the application store, or a relay server.

According to various embodiments, each component (e.g., a module or a program) of the above-described components may include a single entity or multiple entities, and some of the multiple entities may be separately disposed in different components. According to various embodiments, one or more of the above-described components may be omitted, or one or more other components may be added. Alternatively or additionally, a plurality of components (e.g., modules or programs) may be integrated into a single component. In such a case, according to various embodiments, the integrated component may still perform one or more functions of each of the plurality of components in the same or similar manner as they are performed by a corresponding one of the plurality of components before the integration. According to various embodiments, operations performed by the module, the program, or another component may be carried out sequentially, in parallel, repeatedly, or heuristically, or one or more of the operations may be executed in a different order or omitted, or one or more other operations may be added.

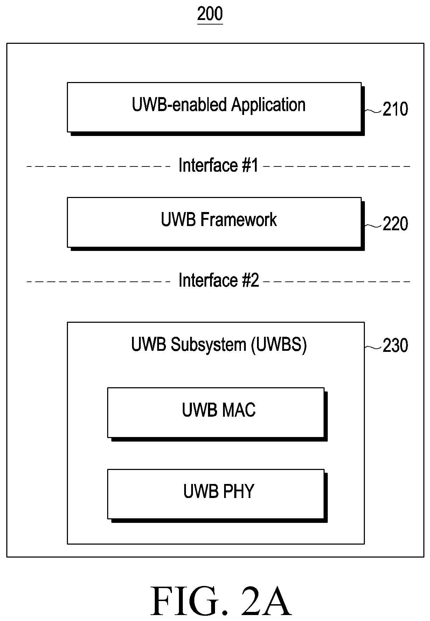

FIG. 2A is a diagram illustrating an architecture of a UWB device according to an embodiment of the disclosure.

In the disclosure, a UWB device 200 may be an electronic device that supports UWB communication. For example, the UWB device 200 may an example of the electronic device 101 of FIG. 1.

The UWB device 200, for example, may be a ranging device that supports UWB ranging. According to an embodiment, the ranging device may be an enhanced ranging device (ERDEV) or a FiRa device.

In the embodiment of FIG. 2A, the UWB device 200 may interact with another UWB device via a UWB session.

In addition, the UWB device 200 may embody a first interface (interface #1) which is an interface between a UWB-enabled application 210 and a UWB framework 220, and the first interface may enable the UWB-enabled application 110 in the UWB device 200 to use UWB capabilities of the UWB device 200 in a predetermined manner. According to an embodiment, the first interface may be a framework API or proprietary interface, but it is not limited thereto.

In addition, the UWB device 200 may embody a second interface (interface #2) that is an interface between the UWB framework 210 and a UWB subsystem (UWBS) 230. According to an embodiment, the second interface may be a UWB command interface (UCI) or proprietary interface, but it is not limited thereto.

With reference to FIG. 2A, the UWB device 200 may include the UWB-enabled application 210, the framework (UWB framework) 220, and/or the UWBS 230 including a UWB MAC layer and a UWB physical layer. In some embodiments, some entities may not be included in the UWB device or an additional entity (e.g., security layer) may be further included.

The UWB-enabled application 210 may trigger configuration of a UWB session by the UWBS 230 by using a first interface. In addition, the UWB-enabled application 210 may use one of predefined profiles. For example, the UWB-enabled application 210 may use one of the profiles defined in FiRa or may use a custom profile. The UWB-enabled application 210 may manage a related event, such as service discovery, ranging notifications, and/or error conditions, by using the first interface.

The framework 220 may enable access to a profile, and provide an individual UWB configuration and/or notification. In addition, the framework 220 may support at least one of a function of performing UWB ranging and transaction, a function of providing an interface to the UWBS 230 and an application, or a function of estimating a location of the device 200. The framework 220 may be a set of software components. As described above, the UWB-enabled application 210 may interface with the framework 220 via the first interface, and the framework 220 may interface with the UWBS 230 via the second interface.

In the disclosure, the UWB-enabled application 210 and/or the framework 220 may be embodied by an application processor (AP) (or processor). Therefore, in the disclosure, it may be understood that the UWB-enabled application 210 and/or the framework 220 is performed by an AP (or processor). In the disclosure, the framework may be referred to as an AP or a processor.

The UWBS 230 may be a hardware component including a UWB MAC layer and a UWB physical layer. The UWBS 230 may perform UWB session management, and may communicate with a UWBS of another UWB device. The UWBS 230 may interface with the framework 120 via the second interface, and may obtain secure data from a secure component. In an embodiment, the framework (or application processor) 220 may transmit a command to the UWBS 230 via a UCI, and the UWBS 230 may transfer a response to the command to the framework 220. The UWBS 230 may transfer a notification to the framework 120 via a UCI.

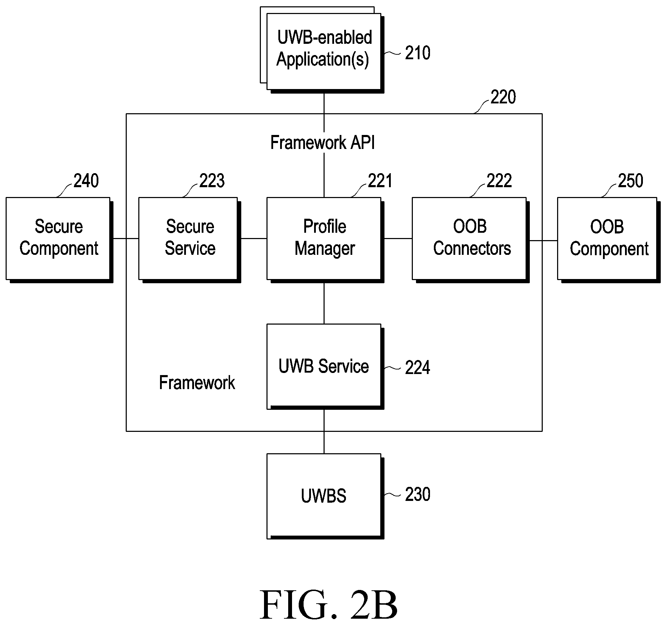

FIG. 2B is a diagram illustrating a configuration of a framework of a UWB device according to an embodiment of the disclosure.

The UWB device of FIG. 2B may be an example of the UWB device of FIG. 2A.

Referring to FIG. 2B, the framework 220, for example, may include software components such as a profile manager 221, an OOB connector(s) 222, a secure service 223, and/or a UWB service 224.

The profile manager 221 may perform a role for managing a profile usable in the UWB device. Here, the profile may be a set of parameters required for configuring communication between UWB devices. For example, the profile may include a parameter indicating an OOB secure channel that is used, a UWB/OOB configuration parameter, a parameter indicating whether use of a predetermined secure component is mandatory, and/or a parameter related to a file structure of an ADF. The UWB-enabled application 210 may communicate with the profile manager 221 via a first interface (e.g., framework API).

The OOB connector 222 may perform a role for configuring an OOB connection with another device. The OOB connector 222 may manage an OOB operation including a discovery operation and/or a connection operation. An OOB component (e.g., BLE component) 250 may be connected to the OOB connector 222.

The secure service 223 may perform a role for interfacing with the secure component 240 such as an SE or TEE.

The UWB service 224 may perform a role for managing the UWBS 230. The UWB service 224 may embody a second interface, and may provide access to the UWBS 230 from the profile manager 221.

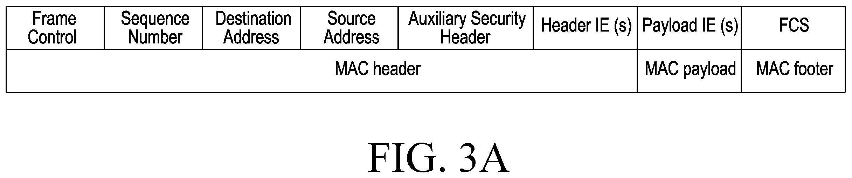

FIG. 3A is a diagram illustrating a structure of a UWB MAC frame according to an embodiment of the disclosure.

In the disclosure, the UWB MAC frame may be referred to as a MAC frame or frame for short. According to an embodiment, the UWB MAC frame may be used for transmitting UWB-related data (e.g., UWB message, ranging message, control information, service data, application data, or the like).

Referring to FIG. 3A, the UWB MAC frame may include a MAC header (MHR), a MAC payload, and/or a MAC footer (MFR).

### (1) MAC header

The MAC header may include a frame control field, a sequence number field, a destination address field, a source address field, an auxiliary security header field, and/or at least one header IE field. According to an embodiment, some of the above-described fields may not be included in the MAC header, or an additional field(s) may be further included in the MAC header.

According to an embodiment, the frame control field may include a frame type field, a security enabled field, a frame pending field, an ack request (AR) field, a PAN ID compression field (PAN ID present field), a sequence number suppression field, an IE present field, a destination addressing mode field, a frame version field, and/or a source addressing model field. According to an embodiment, some of the above-described fields may not be included in the frame control field, or an additional field(s) may be further included in the frame control field.

A description of each field is as follows.

A frame type field may indicate a frame type. According to an embodiment, a frame type may include a data type and/or a multipurpose type.

A security enabled field may indicate whether an auxiliary security header field exists. The auxiliary security header field may include information required for security processing.

A frame pending field may indicate whether a device that transmits a frame has more data for a recipient. That is, the frame pending field may indicate whether a pending frame exists for a recipient.

An ack request (AR) field may indicate whether an acknowledgement for reception of a frame is required from a recipient.

A PAN ID compression field (PAN ID present field) may indicate whether a PAN ID field exists.

A sequence number suppression field may indicate whether a sequence number field exists. The sequence number field may indicate a sequence identifier for a frame.

An IE present field may indicate whether a header IE field and a payload IE field are included in a frame.

A destination addressing mode field may indicate whether a destination address field includes a short address (e.g., 16 bits) or an extended address (e.g., 64 bits). The destination address field may indicate an address of a recipient of a frame.

A frame version field may indicate a frame version. For example, the frame version field may be configured to a value indicating IEEE std 802.15.4z-2020.

A source addressing mode field may indicate whether a source address field exists, and, when a source address field exists, may indicate whether the source address field includes a short address (e.g., 16 bits) or an extended address (e.g., 64 bits). The source address field may indicate an address of an originator of a frame.

### (2) MAC payload

The MAC payload may include at least one payload IE field. According to an embodiment, a payload IE field may include a vendor specific nested IE.

### (3) MAC footer

The MAC footer may include an FCS field. The FCS field may include a 16-bit CRC or a 32-bit CRC.

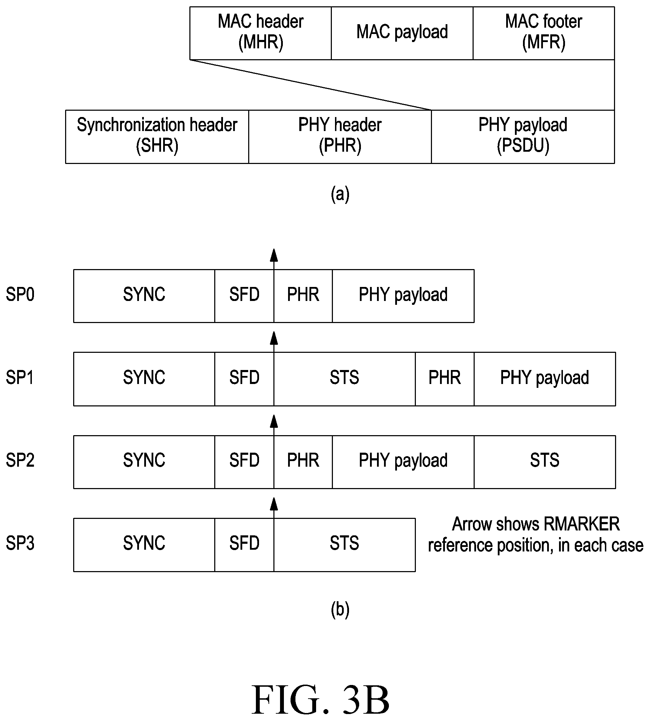

FIG. 3B is a diagram illustrating a structure of a UWB PHY packet according to an embodiment of the disclosure.

Part A of FIG. 3B illustrates a structure of a UWB PHY packet to which an STS packet configuration is not applied, and part B of FIG. 3B illustrates a structure of a UWB PHY packet to which an STS packet configuration is applied. The UWB PHY packet may be referred to as a PHY packet, a PHY PDU (PPDU), or a frame.

Referring to part A of FIG. 3B, a PPDU may include a synchronization header (SHR), a PHY header (PHR), and a PHY payload (PSDU). The PSDU may include a MAC frame, and as illustrated in FIG. 2, the MAC frame may include a MAC header (MHR), a MAC payload, and/or a MAC footer (MFR). A synchronization header part may be referred to as a preamble, and a part including the PHY header and the PHY payload may be referred to as a data part.

The synchronization header may be used for synchronization for signal reception, and may include a SYNC field and a start-of-frame delimiter (SFD).

The SYNC field may be a field including a plurality of preamble symbols used for synchronization between transmission/reception devices. The preamble symbol may be configured by one of predefined preamble codes.

An SFD field may be a field indicating an end of an SHR and a start of a data field.

The PHY header may provide information associated with a configuration of the PHY payload. For example, the PHY header may include information associated with a length of the PSDU, information indicating whether a current frame is an RFRAME (or data frame), or the like.

A PHY layer of a UWB device may include an optional mode for providing a decreased on-air time for a high density/low power operation. In this instance, a UWB PHY packet may include a ciphered sequence (i.e., STS) for increasing integrity and accuracy of a ranging measurement timestamp. The STS may be included in an STS field of a UWB PHY packet, and may be used for security ranging.

Referring to part B of FIG. 3B, in the case of STS packet (SP) configuration 0 (SP0), an STS field may not be included in a PPDU (SP0 packet). In the case of SP configuration 1 (SP1), an STS field may be included immediately after a start of frame delimiter (SFD) field and before a PHR field (SP1 packet). In the case of SP configuration 2 (SP2), an STS field may be after a PHY payload (SP2 packet). In the case of SP configuration 3 (SP3), an STS field may be immediately after an SFD field, and a PPDU may not include a PHR and data field (PHY payload) (SP3 packet). That is, in the case of SP3, a PPDU may not include a PHR and a PHY payload.

As illustrated in part B of FIG. 3B, each UWB PHY packet may include RMARKER to define a reference time, and the RMARKER may be used for obtaining a transmission time (transmission timestamp) of a ranging message (frame), a reception time (reception timestamp), and/or a time interval in a UWB ranging procedure. For example, a UWB PHY packet may include RMARKER in a preamble or the end of the preamble.

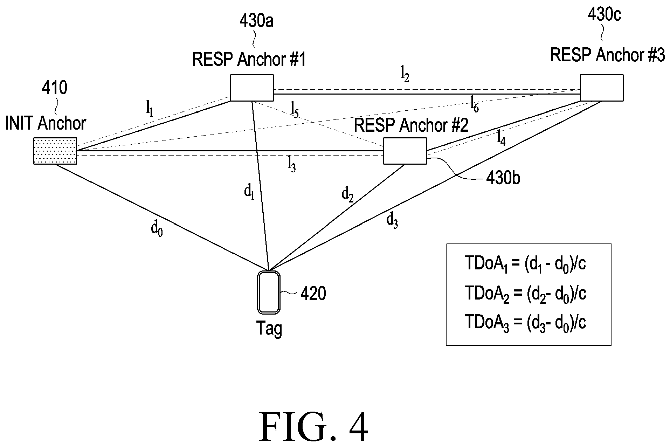

FIG. 4 is a diagram illustrating an example of a cluster configured with a plurality of UWB anchors according to an embodiment of the disclosure.

The cluster may be a set of UWB anchors (DT-anchors) that exchange DTMs with each other, in order to provide a positioning service to a UWB tag. For example, as illustrated in FIG. 4, the cluster may be a set including a single initiator anchor (initiator DT-anchor) 410 and three responder anchors (responder DT-anchors) 430a, 430b, and 430c. In this instance, the embodiment is not limited thereto, and the number of UWB anchors included in a cluster, and the number of initiator anchors and responder anchors may be configured variously according to embodiments.

According to an embodiment, a UWB anchor may operate in one or more clusters. In this instance, a UWB anchor that operate as an initiator anchor in one cluster may operate as a responder anchor in another cluster.

According to an embodiment, an area covered by one cluster may overlap an area covered by an adjacent cluster.

Referring to FIG. 4, a UWB tag 420 may receive DTMs exchanged between the UWB anchors 410, 430a, 430b, and 430c, and may calculate TDoAs associated with multiple pairs of anchor devices based on the received DTMs. For example, based on the received DTMs, the UWB tag 420 may calculate TDoA₁ that is a TDoA between the initiator anchor 410 and the responder anchor 430a, TDoA₂ that is a TDoA between the initiator anchor 410 and the responder anchor 430b, and TDoA₃ that is a TDoA between the initiator anchor 410 and the responder anchor 430c. The UWB tag 420 may estimate (or determine) its location by using the calculated TDoAs.

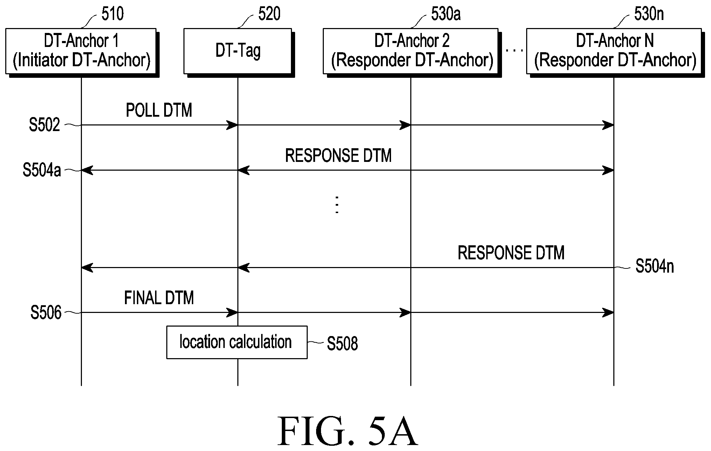

FIG. 5A is a diagram illustrating a method of performing UWB ranging based on a DL-TDoA scheme by a UWB device according to an embodiment of the disclosure.

In the embodiment of FIG. 5A, it is assumed that one initiator anchor (initiator DT-anchor) 510 and n responder anchors (responder DT-anchors 530a, ..., 530n) operate as UWB anchors (DT-anchor). For example, as illustrated in FIG. 4, one initiator anchor and three responder anchors may operate as UWB anchors. In this instance, the embodiment is not limited thereto, and the number of UWB anchors included in a cluster, and the number of initiator anchors and responder anchors may be configured variously according to an embodiment.

In operation S502, the initiator anchor 510 may transmit or broadcast a poll DTM that responder anchors in a cluster receive, and may initiate a DL-TDoA round. The poll DTM may include scheduling information (e.g., ranging slot index) associated with each responder anchor in order to transmit a response DTM in an allocated ranging slot. The poll DTM may further include transmission time information (transmission timestamp) indicating a time at which the poll DTM is transmitted. The poll DTM may further include a round index of a current ranging round and a block index of a current ranging block at which the poll DTM is transmitted. The poll DTM may further include location information of a UWB anchor that transmits the poll DTM.

According to an embodiment, each responder anchor 530a, ..., and 530n may identify whether to transmit a response DTM and/or a slot (ranging slot index) to be used for transmitting its response DTM, by referring to scheduling information in the poll DTM.

In operations S504a,...,S504n, each responder anchor 530a,...,530n that receives the poll DTM may provide a response to the initiator anchor 510 by using a response DTM in a ranging slot allocated by the poll DTM. For example, each responder anchor 530a,...530n may transmit or broadcast a response DTM in its ranging slot allocated by the poll DTM. Each response DTM may include reply time information indicating a time between a time at which the poll DTM is received and a time at which a corresponding response DTM is transmitted. Each response DTM may include a transmission time (transmission timestamp) indicating a time at which the corresponding response DTM is transmitted. Each response DTM may further include a round index of a current ranging round and a block index of a current ranging block at which the corresponding response DTM is transmitted. Each response DTM may further include location information of a UWB anchor that transmits the corresponding response DTM.

In operation S506, the initiator anchor 510 that receives response DTMs may additionally transmit a final DTM to the responder anchors 530a, ..., 530n. For example, the initiator anchor 510 may transmit or broadcast the final DTM after receiving the response DTMs from the responder anchors 530a, ..., 530n. The final DTM may include each reply time indicating a time between a time at which each response DTM is received and a time at which the final DTM is transmitted. That is, the final DTM may include a list of reply times, and the list may include reply times indicating times between times at which respective response DTMs are received and the time at which the final DTM is transmitted. The final DTM may include a transmission time (transmission timestamp) indicating a time at which the final DTM is transmitted. The final DTM may further include a round index of a current ranging round and a block index of a current ranging block at which the final DTM is transmitted.

In operation S508, a tag device (DT-tag) 520 may receive (or overhear) the poll DTM, the response DTMs, and the final DTM, may obtain information included in each DTM message, and reception time information (reception timestamp) indicating a time at which each DTM message is received, and may calculate TDoA values using the obtained information. The tag device 520 may obtain (or estimate) its location by using the calculated TDoAs. For example, the tag device 520, a user device, may calculate a relative distance to an anchor device using TDoAs associated with multiple pairs of anchor devices, and may estimate its location. Through the above, the tag device 520 may estimate its location without exposure of its location.

Above-described each DTM may be included in a MAC frame (e.g., MAC frame of FIG. 3A) and may be transmitted via a UWB signal (or PHY packet (e.g., PHY packet of FIG. 3B)).

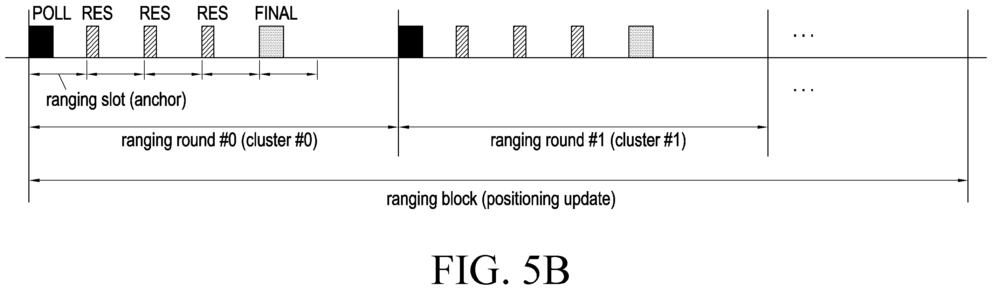

FIG. 5B is a diagram illustrating an example of a ranging block structure for a downlink TDoA scheme according to an embodiment of the disclosure.

The ranging block structure of FIG. 5B may be an example of a ranging block structure for performing the ranging scheme of FIG. 5A.

Referring to FIG. 5B, a ranging block may include a plurality of ranging rounds.

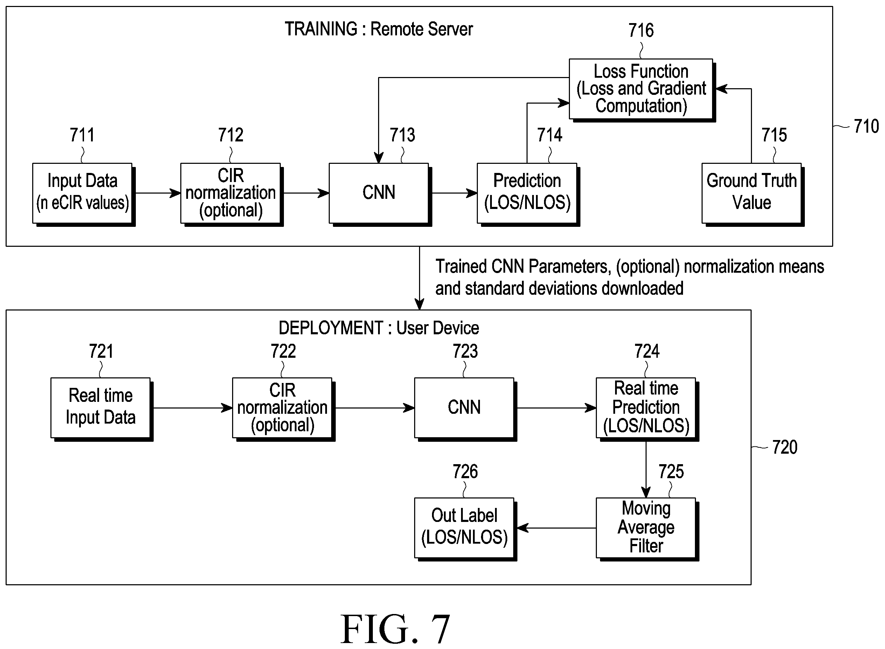

According to an embodiment, the ranging block may include a plurality of ranging rounds allocated respectively to a plurality of clusters. For example, in the case of n clusters are arranged, a ranging block may include a first ranging round allocated for a first cluster, a second ranging round allocated for a second cluster, ... and an n^{th} ranging round allocated for an n^{th} cluster. Although not illustrated in FIG. 7B, in some embodiments, a plurality of ranging rounds may be allocated to a single cluster, and a single ranging round may be allocated to a plurality of clusters.

According to an embodiment, a ranging round may include a plurality of ranging slots. A ranging round may include a plurality of ranging slots allocated for a ranging message that each anchor device, belonging to a cluster associated with the corresponding ranging round, transmits. For example, in the case in which a first cluster is configured with one initiator anchor and three responder anchors, a ranging round for the first cluster may include a first ranging slot (e.g., ranging slot index 0) allocated for transmission/reception of a poll message of the initiator anchor included in the first cluster, a second ranging slot allocated for transmission/reception of a response message of a first responder anchor, a third ranging slot allocated for transmission/reception of a response message of a second responder anchor, a fourth ranging slot allocated for transmission/reception of a response message of a third responder anchor, and a fifth ranging slot allocated for transmission/reception of a final message of the initiator anchor.

In this manner, ranging slots may be allocated to a ranging round for each cluster.

Via the ranging block structure as illustrated in FIG. 5B, anchor devices of each cluster may perform one cycle of ranging message exchange in its corresponding ranging round in one ranging block, and a user device (tag device) may receive the ranging messages and may calculate its location. The operation may be repeated for each ranging block. Through the above, the location of the user device may be updated based on a ranging block-cycle.

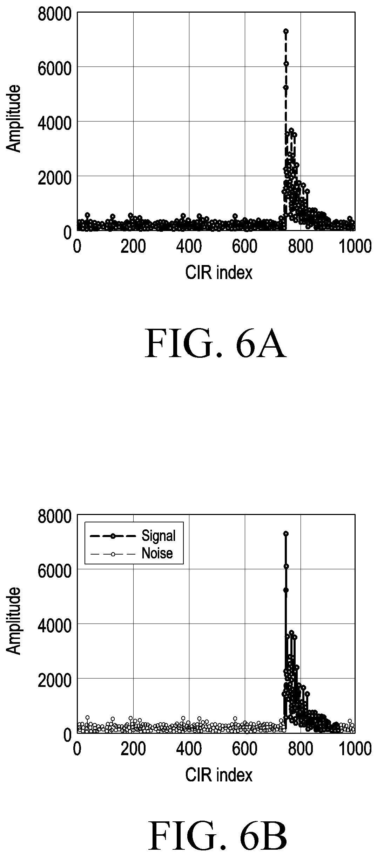

FIG. 6A is a diagram illustrating an example of UWB CIR data according to an embodiment of the disclosure.

A UWB channel impulse response (CIR) may be obtained by receiving a UWB signal. For example, when a UWB signal for a DL-TDoA is received, a UWB device may obtain UWB CIR data based on the received signal. In the disclosure, the UWB CIR may be referred to as CIR for short.

According to an embodiment, the UWB device may obtain UWB CIR data by using a correlation value between an impulse function and a received UWB signal.

An example of UWB CIR data obtained based on a UWB signal may be as shown in FIG. 6A. As illustrated in FIG. 6A, for example, 1016 CIR values may be output. Referring to FIG. 6A, a peak of an amplitude may occur after a predetermined CIR index (e.g., CIR index 750).

For example, based on each UWB signal including a DTM message that a UWB tag receives during a DL-TDoA process, the UWB device (e.g., UWB tag) may obtain UWB CIR data corresponding to the corresponding UWB signal.

FIG. 6B is a diagram illustrating an example of effective UWB CIR data according to an embodiment of the disclosure.

In the disclosure, an effective UWB CIR may be a CIR having a significant value among CIRs. That is, the effective UWB CIR may be a CIR measured or obtained by an actual signal, as opposed to by noise. In the disclosure, the effective UWB CIR may be referred to as an effective CIR (eCIR).

According to an embodiment, a UWB device may process, as noise, CIR values before a peak, and may process n CIR values from the peak as eCIRs.

According to an embodiment, the UWB device may determine, as eCIRs, n CIRs from a CIR index obtained by subtracting a margin value from a CIR index at which a peak occurs. For example, in the case in which a peak occurs at CIR index 750 and a margin value is 5 (margin = 5), and n is configured to 200 (n=200), the electronic device may identify CIRs from the CIR index 745 to CIR index 945 as eCRIs. As described above, CIRs may be classified as signals and noise, and an example of the classification may be as shown in FIG. 6B.

In the case in which CIRs classified as eCIRs among obtained CIRs are only used as input data for a CNN model for LOS/NLOS signal classification, inaccurate noise may be removed and accuracy of classification may be increased.

In addition, in the case in which CIRs classified as eCIRs among obtained CIRs are used, latency for CIR data exchange may be optimized.

In addition, in the case in which CIRs classified as eCIRs among obtained CIRs are used, an input matrix may be optimized and a terminal's processing efficiency may be improved.

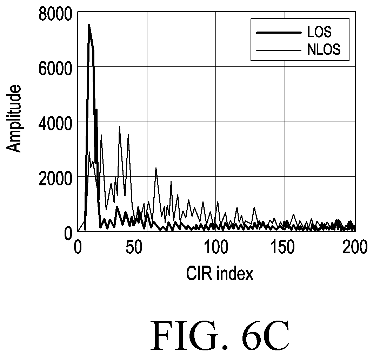

FIG. 6C is a diagram illustrating an example of an LOS signal and an NLOS signal classified using UWB CIR data according to an embodiment of the disclosure.

As described above, CIR values used for LOS signal/NLOS signal classification may be eCIR values. For example, as illustrated in FIG. 6C, n (e.g., 200) eCIR values may be used for LOS/NLOS signal classification.

CIR values (eCIR values) of an LOS signal and an NLOS signal may have different characteristics.

For example, an LOS signal may have at least one of the following characteristics.
- A peak value of a CIR is higher than a peak value of an NLOS signal.
- A CIR value after a peak is dramatically decreased to a noise level.
- A small number of peaks occur, for example, one or two peaks.
- For example, an NLOS signal may have at least one of the following characteristics.
- A peak value of a CIR is lower than a peak value of an LOS signal.
- It takes a long period of time until a CIR value after a peak value is decreased to a noise level.
- Multiple peaks appear due to a multipath signal.

Due to the difference in characteristics of CIR values between an LOS signal and an NLOS signal, whether a corresponding signal (e.g., UWB signal) is an LOS signal or an NLOS signal may be classified based on measured CIR data.

According to an embodiment, the UWB device may use a deep learning algorithm in order to classify whether a corresponding signal is an LOS signal or an NLOS signal by using CIR data (eCIR data) for the corresponding signal. For example, the UWB device may perform LOS/NLOS signal classification by using a CNN model (CNN algorithm). An LOS/NLOS signal classification method using a CNN model will be described with reference to FIGS. 7 to 8.

FIG. 7 is a diagram illustrating a training procedure and a deployment procedure for LOS/NLOS signal classification using UWB channel impulse response data according to an embodiment of the disclosure.

In the embodiment of FIG. 7, for ease of description, it is assumed that a training procedure 710 is performed in a remote server, and a deployment procedure 720 is performed in a user device. In this instance, the embodiment is not limited thereto. For example, if the user device is a device having high computing power, a training procedure may also be performed in the user device.

With reference to FIG. 7, the training procedure 710 will be described.

In the training procedure 710, a server may collect input data in operation 711. For example, the server may collect CIR data (e.g., eCIR data including n eCIR values) for a UWB signal as input data for training.

The server may perform CIR normalization processing with respect to the collected input data in operation 712. For example, the server may normalize the collected input data to a range of 0 to 1. In this instance, the CIR normalization of operation 712 is an optional operation and may be omitted.

The server may input CIR normalized data or CIR non-normalized data as input data of a CNN model, and may perform processing for LOS/NLOS classification using the CNN model in operation 713.

Tables 1 and 2 given below list an example of hyperparameters and characteristics of a CNN model used for LOS/NLOS classification.

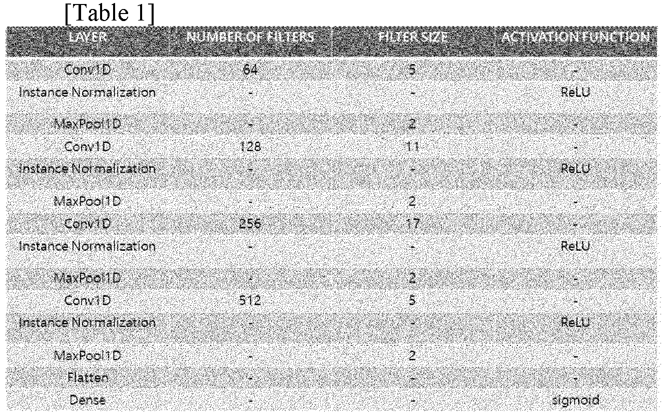

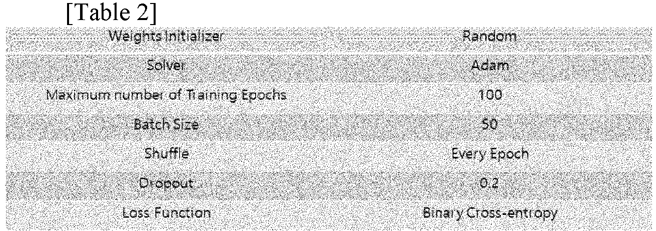

The server may obtain a predicted value output from the CNN model in operation 714. According to an embodiment, the predicted value may include a probability value (first predicted value) for a label (e.g., label 1) corresponding to an LOS signal and/or a probability value (second predicted value ) for a label (e.g., label 2) corresponding to an NLOS signal. Here, the first predicted value may indicate a probability that the corresponding UWB signal is an LOS signal, and may be expressed as p(LOS). The second predicted value may indicate a probability that the corresponding UWB signal is an NLOS signal, and may be expressed as p(NLOS).

The server may obtain a ground truth value for the corresponding signal in operation 715. According to an embodiment, the ground truth value may include a probability value (first ground truth value) for a label (e.g., label 1) corresponding to an LOS signal and/or a probability value (second ground truth value) for a label (e.g., label 2) corresponding to an NLOS signal. Here, the first ground truth value may indicate a ground truth probability that the corresponding UWB signal is an LOS signal, and the second probability value may indicate a ground truth probability that the corresponding UWB signal is an NLOS signal.

The server may calculate a loss between the predicted value of operation 714 and the ground truth value of operation 715 and a gradient value by using a loss function, in operation 716. For example, a total loss may be calculated based on a loss between the predicted value (first predicted value) and the ground truth value (second ground truth value) associated with the LOS signal and a loss between the predicted value (first predicted value) and the ground truth value (second ground truth value) associated with the NLOS signal.

The server may update parameters of the CNN model by using the value obtained in operation 716. For example, by using a back-propagation scheme, the server may update the parameters of the CNN model to decrease a loss. The parameters updated as described above may be used for the CNN model in order to process subsequent input data (e.g., subsequent n eCIR values).

By performing the above-described training procedure 710 with respect to all of the collected input data sets (e.g., each input data set includes n eCIR values for each UWB signal), the server may continuously update parameters of the CNN model (CNN parameters) to decrease a loss. The user device may obtain or download the CNN parameters trained in this manner. In addition, the user device may download information associated with whether normalization is used. In addition, the user device may download standard deviations related to the CNN model.

Hereinafter, with reference to FIG. 7, the deployment procedure 720 will be described.

In the deployment procedure 720, the user device may collect real time input data in operation 721. For example, the user device may collect input data for each UWB signal (e.g., n eCIR values for each UWB signal) in real time.

The user device may perform CIR normalization with respect to the collected input data in operation 722. For example, the user device may normalize the collected input data to a range of 0 to 1. In this instance, the CIR normalization of operation 722 is an optional operation and may be omitted.

The user device may input CIR normalized data or CIR non-normalized data as input data of a CNN model, and may perform processing for LOS/NLOS classification using the CNN model in operation 723. The CNN model of the user device may use the CNN parameters obtained by the training procedure 710 in order to process the input data.

The user device may obtain predicted data (real time predicted data) output from the CNN model in operation 724. According to an embodiment, the predicted data output from the CNN model may include a predicted value for first eCIR data (first n eCIR data among the real time input data) corresponding to a first UWB signal, a predicted value for second eCIR data (second n eCIR data among the real time input data) corresponding to a second UWB signal, ..., and a predicted value for n^{th} eCIR data (n^{th} n eCIR data among the real time input data) corresponding to an n^{th} UWB signal. Each predicted value may include a probability value (p(LOS)) indicating a probability that a corresponding UWB signal is an LOS signal and/or a probability value (p(NLOS)) indicating a probability that a corresponding UWB signal is an NLOS signal.

The user device may perform filtering of a predicted value (predicted data) by using a filter (e.g., low pass filter (LPF) or moving average filter) in operation 725. According to an embodiment, a moving average filter may have a window length parameter indicating a length of a window used for calculating an average of data, a hyperparmeter, and the user device may perform filtering of predicted data using the moving average filter having the window length parameter.

For example, the user device may replace each predicted value with an average value that is associated with the corresponding predicted value and is obtained based on the window lengeth parameter, by using the moving average filter. For example, when the window lengeth parameter is a first value (e.g., 3), a predicted value for first eCIR data may be replaced with an average value of the predicted value for the first eCIR data, a predicted value for second eCIR data, and a predicted value for third eCIR data, and the predicted value for the second eCIR data may be replaced with an average value of the predicted value for the second eCIR data, the predicted value for the third eCIR data, and a predicted value for fourth eCIR data. In this manner, each predicted value may be replaced with a corresponding average value, and the predicted data may be filtered.

The user device may obtain an output label for real time input data by using the filtered data in operation 726. By using the filtered data, the user device may finally determine whether an output label for a corresponding UWB signal is a label (e.g., label 1) corresponding to an LOS signal or a label (e.g., label 2) corresponding to an NLOS signal. Through the above, the user device may finally classify whether the corresponding signal is an LOS signal or an NLOS signal. As described above, before final LOS/NLOS signal classification, by providing filtering that uses a moving average filter for predicted data output from the CNN model, the accuracy of LOS/NLOS signal classification may be increased.

Table 3 given below lists comparison in accuracy of LOS/NLOS classification between the case with an LPF filter (e.g., moving average filter) and the case without an LPF filter.

**[Table 3]**

| | Hand (LOS) | Front pocket (LOS) | Hand (NLOS) | Back pocket (NLOS) |
|---|---|---|---|---|
| w/o LPF | 87.4% | 78.8% | 99.8% | 75.4% |
| w/ LPF | 99.4% | 92.0% | 100% | 90.6% |

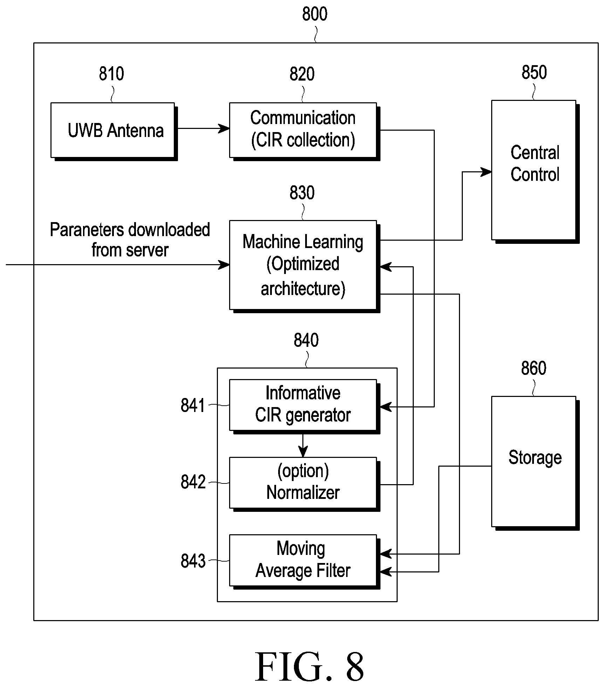

FIG. 8 is a diagram illustrating a configuration of a user device for LOS/NLOS classification according to an embodiment of the disclosure.

Referring to FIG. 8, a user device 800 may include a UWB antenna 810, a CIR collector 820, a machine learning unit 830, a classification processor 840, a central controller 850, and/or storage 850. The classification processor 840 may include an effective CIR generator 841, a normalizer 842, and/or a moving average filter 843.

According to an embodiment, some of the above-described components may be omitted or an additional component may be further included. According to an embodiment, two or more components among the above-described components may be combined into a single component. According to an embodiment, the whole or part of the above-described components may be embodied by at least one processor (or controller). For example, components excluding the UWB antenna 810 and the storage 850 may be embodied by at least one processor (or controller).

The UWB antenna 810 may receive at least one UWB signal from another electronic device. For example, the UWB antenna 810 may receive at least one UWB signal for a DL-TDoA. For example, the UWB antenna 810 may receive UWB signals including DTMs.

The CIR collector 820 may collect CIR data from at least one UWB signal received via the UWB antenna 810. The CIR collector 820 may transfer the collected CIR data to the effective CIR generator 841. The collected CIR data may include CIR values for each UWB signal.

The effective CIR generator 841 may generate effective CIR data from the collected CIR data. The effective CIR generator 841 may transfer the generated effective CIR data to the normalizer 842, or may directly transfer the same to the machine learning unit 830. The effective CIR data may include effective CIR values (e.g., n eCIRs) for each UWB signal.

The normalizer 842 may normalize values of the effective CIR (eCIR) data. For example, the normalizer 842 may normalize the values of the effective CIR data to values in the range of 0 to 1. The normalizer 842 may be an optional configuration. For example, the normalizer 842 may not be included in the user device 800, or the processing by the normalizer 842 may be omitted although the normalizer 842 is included in the user device 800.

The machine learning unit 830 may generate predicted data using input effective CIR data. According to an embodiment, the machine learning unit 830 may generate predicted data using a CNN model. According to an embodiment, the CNN parameters of the CNN model may be downloaded from a server in which a training procedure is performed in advance. Therefore, the machine learning unit 830 may use an optimized CNN model.

According to an embodiment, the machine learning unit 830 may perform processing in units of a predetermined number of eCIRs (e.g., n eCIRs) (eCIR set), and may output a predicted value for the corresponding eCIR set. For example, the predicted data may include a predicted value for first n eCIRs (first eCIR set) corresponding to a first UWB signal, a predicted value for subsequent n eCIRs (second eCIR set) corresponding to a second UWB signal, ..., and a predicted value for n^{th} n eCIRs (n^{th} eCIR set) corresponding to an n^{th} UWB signal. Each predicted value may include a probability value (p(LOS)) indicating that a probability that a corresponding UWB signal is an LOS signal and/or a probability value (p(NLOS)) indicating a probability that a corresponding UWB signal is an NLOS signal.

The machine learning unit 830 may transfer the predicted data to the central controller 850 and/or the moving average filter 843.

The central controller 850 may transfer the received predicted data to the storage 830. The storage 830 may storage the received predicted data, and may transfer the stored predicted data to the moving average filter 843.

By using the predicted data (e.g., current predicted data) received from the machine learning unit 730 and the predicted data (e.g., previous predicted data) received from the storage 760, the moving average filter 743 may calculate an average value based on a predetermined window length parameter, and may perform filtering of the predicted data using the average value. For example, when the window length parameter is a first value (e.g., 3), a predicted value for first eCIR data may be replaced with an average value of the predicted value for the first eCIR data, a predicted value for second eCIR data, and a predicted value for third eCIR data, and the predicted value for the second eCIR data may be replaced with an average value of the predicted value for the second eCIR data, the predicted value for the third eCIR data, and a predicted value for fourth eCIR data. In this manner, each predicted value may be replaced with a corresponding average value, and the predicted data may be filtered. The filtered predicted data may be used for final LOS signal or NLOS signal classification. The filtered predicted data may be used by various applications.

The disclosure provides a method in which an electronic device receives a UWB signal, obtains UWB CIR data associated with the corresponding UWB signal, and classifies whether the UWB signal is a line of sight (LOS) signal or a non-LOS (NLOS) signal based on the UWB CIR data. The UWB signal may be a UWB signal used for DL-TDoA ranging (OWR). For example, the UWB signal may be a signal including a DTM (or a signal including a UWB PHY packet including a DTM).

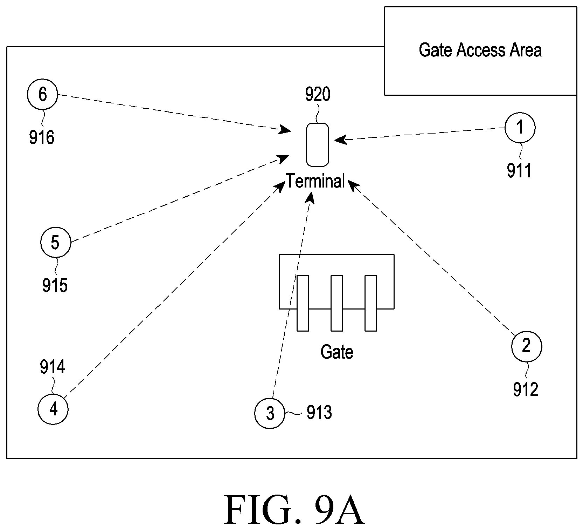

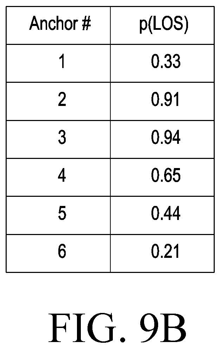

According to an embodiment, for LOS signal or NLOS signal classification, a convolutional neural network (CNN) algorithm (e.g., the CNN model of FIG. 8/9) may be used. As described above, data having a time series characteristic is classified by using a CNN model, and high classification accuracy may be provided.

According to an embodiment, as input data for the CNN model used for classifying an LOS signal or an NLOS signal, effective CIR data obtained by removing noise from UWB CIR data may be used. Through the above, accuracy of LOS/NLOS signal classification and accuracy of pose classification may be increased.

The disclosure provides a method of filtering predicted data output from each CNN model, before performing final LOS/NLOS signal classification. For filtering, a moving average filter may be used. Through the above, accuracy of LOS/NLOS signal classification and accuracy of pose classification may be increased.

The disclosure provides a method for various applications of an electronic device to use a classified LOS/NLOS signal. For example, an application for a tagless gate, a digital car key application, or a point of service (POS) application may use the classification method of the disclosure.

According to an embodiment, by using an accurately classified LOS/NLOS signal, an application may perform adaptive ranging frequency adjustment which is for power saving.

According to an embodiment, the application may selectively use only an LOS signal via accurate LOS/NLOS signal classification, thereby increasing the accuracy of location estimation. To this end, a probability that a corresponding UWB signal is an LOS signal needs to be calculated using LOS/NLOS classification. That is, an LOS probability for a UWB signal needs to be calculated.

According to an embodiment, the application may configure an adaptive access boundary via accurate LOS/NLOS signal and pose classification.

Based on an LOS probability (a probability that a corresponding UWB signal is an LOS signal) (expressed as p(LOS)) obtained based on the LOS/NLOS classification method, the disclosure provides a method in which an electronic device performs DL-TDoA positioning by using UWB signals having high LOS probabilities. For example, the electronic device may perform DL-TDoA positioning (e.g., 3D DL-TDoA positioning) by using UWB signals having top m (e.g., 4) LOS probabilities. Through the above, the accuracy of DL-TDoA positioning may be increased.

In this instance, when only UWB signals having high LOS probabilities are used, there may be a situation in which a user device is out of a cluster configured with UWB anchors that transmit the corresponding UWB signals. This is because an LOS probability of a UWB signal of a UWB anchor located in front of the user device is generally high. When a location of the user device calculated via DL-TDoA positioning is out of the cluster, the accuracy (or reliability) of DL-TDoA positioning may be low. Therefore, the disclosure may provide a method of selecting, based on an LOS probability (p(LOS)) obtained via LOS/NLOS classification, optimal UWB signals (or UWB anchors/UWB anchor combination) so that the location of the user device is within the cluster when using UWB signals having high available LOS probabilities.

Hereinafter, various embodiments in which an electronic device improves location accuracy in DL-TDoA by using the above-described LOS/NLOS classification, will be described.

FIG. 9A is a diagram illustrating an example of a DL-TDoA positioning environment according to an embodiment of the disclosure.

In FIG. 9A, for ease of description, it is assumed that a DL-TDoA positioning environment is an environment in which 6 UWB anchors for DL-TDoAs and one user device (terminal) exist in a gate access area where a gate is located. In this instance, the embodiment is not limited thereto, and the DL-TDoA positioning environment may be related to other situations or other applications (e.g., PoS application), and the number of UWB anchors for DL-TDoA and the number of user devices may be various.

Referring to FIG. 9A, a user device 920 may receive a UWB signal for a DL-TDoA from each UWB anchor 911, 912, 913, 914, 915, and 916. For example, the user device 920 may receive a UWB signal including a poll DTM and a UWB signal including a final DTM from an initiator anchor. For example, the user device 920 may receive a UWB signal including a response DTM from each responder anchor.

The user device 920 may obtain timestamp information from UWB signals received from m neighboring UWB anchors (e.g., transmission timestamp and/or reception timestamp), respectively, and may use the obtained m pieces of timestamp information for DL-TDoAs. For example, in the case of three-dimensional (3D) DL-TDoA positioning, UWB signals received from at least four UWB anchors are needed for DL-TDoA positioning, and thus the user device 920 may obtain timestamp information from four UWB signals and may estimate its location.

According to an embodiment, the user device 920 may select combinations including m UWB signals (or UWB anchors or DTMs) selectable from n UWB signals (or UWB anchors or DTMs), and may estimate its location by using timestamp information of each combination. In this instance, the user device may estimate its location based on each combination, and may determine an accurate location by removing a location having a highest variance and performing recalculation. For example, the user device may determine its location by performing calculation C(n,4) times.

A timestamp (reception timestamp) of a UWB signal may be measured using a first peak of a preamble of a UWB signal (e.g., a preamble of a UWB PHY packet included in a UWB signal). In the case in which a UWB signal is an LOS signal, one peak occurs, and thus the user device 920 may clearly identify a first peak for a preamble of the corresponding UWB signal. Conversely, when a UWB signal is an NLOS signal, multiple peaks occur due to a multipath characteristic, and thus the user device 920 may be difficult to clearly identify which peak is a first peak for a preamble of the corresponding UWB signal. Therefore, when the UWB signal is an NLOS signal, there is a high probability of having an error in a reception timestamp. The error of the timestamp may cause an error of DL-TDoA positioning.

Therefore, when the user device 920 is capable of identifying an LOS quality (e.g., p(LOS)) for a corresponding UWB signal by using an LOS/NLOS classification method (e.g., the LOS/NLOS classification method described with reference to FIG. 7/8), the user device 920 may perform DL-TDoA positioning using only a reception timestamp of a UWB signal having a high LOS quality. For example, the user device 920 may perform DL-TDoA positioning using only reception timestamps of UWB signals having top four p(LOS). Through the above, accurate positioning is enabled.

FIG. 9B is a diagram illustrating an example of LOS probability data for a UWB signal obtained in the DL-TDoA positioning environment of FIG. 9A.

By using an LOS/NLOS classification method (e.g., the LOS/NLOS classification method described with reference to FIG. 7/8), the user device 920 may obtain an LOS probability (LOS quality) for a UWB signal received from each UWB anchor.

For example, as illustrated in FIG. 9B, an LOS probability for a UWB signal received from the first UWB anchor 911 may be 0.33 (p(LOS)=0.33), an LOS probability for a UWB signal received from the second UWB anchor 912 may be 0.91 (p(LOS)=0.91), an LOS probability for a UWB signal received from the third UWB anchor 913 may be 0.94 (p(LOS)=0.94), an LOS probability for a UWB signal received from the fourth UWB anchor 914 may be 0.65 (p(LOS)=0.65), an LOS probability for a UWB signal received from the fifth UWB anchor 915 may be 0.44 (p(LOS)=0.44), and an LOS probability for a UWB signal received from the sixth UWB anchor 916 may be 0.21 (p(LOS)=0.21).

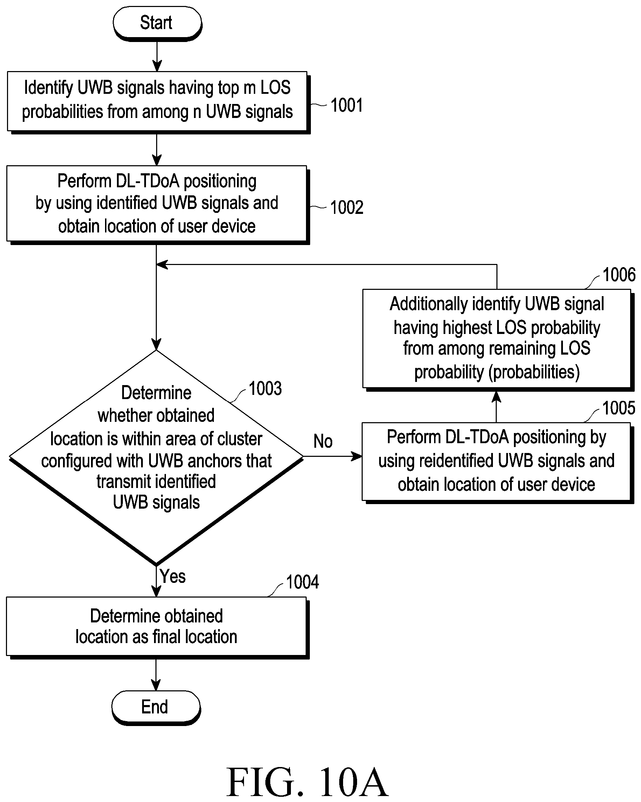

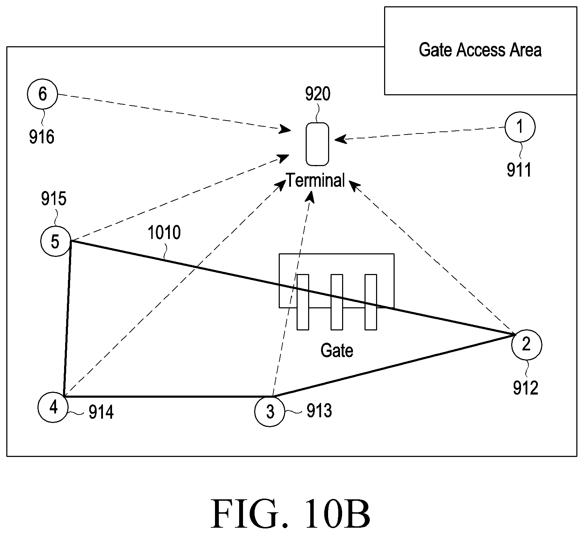

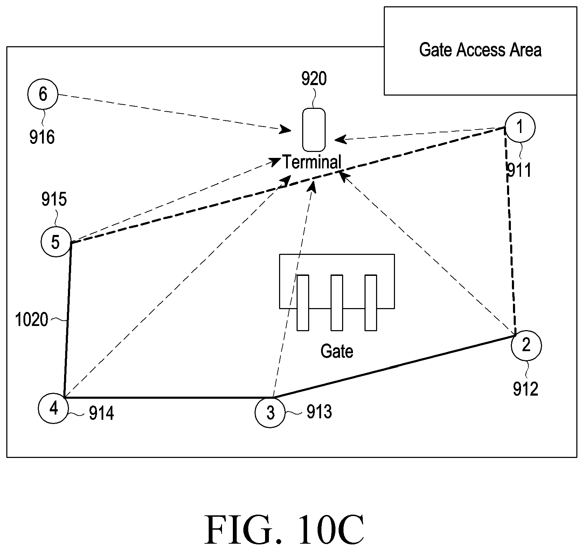

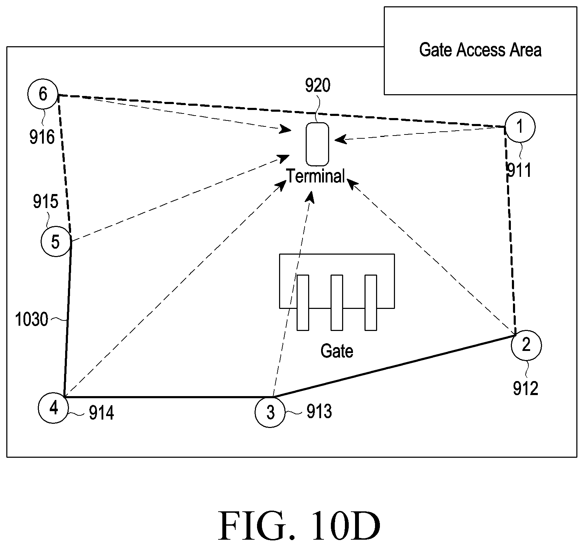

Hereinafter, for ease of description, various embodiments of the disclosure will be described with reference to FIGS. 10 to 12, by using the DL-TDoA positioning environment of FIG. 9A and the LOS probability data of FIG. 9B as examples. In this instance, as described above, the embodiment is not limited thereto.

FIG. 10A is a flowchart illustrating a method of performing DL-TDoA positioning according to an embodiment of the disclosure. FIGS. 10B to 10D are diagrams illustrating examples of a cluster configured according to the method of performing DL-TDoA positioning of FIG. 10A.

Referring to FIG. 10A, in operation 1001, the user device (terminal) 920 may identify (or select) UWB signals having top m LOS probabilities from among n UWB signals (m<n). The user device 920 may identify UWB signals having top m LOS probabilities among LOS probabilities (p(LOS)) for the n UWB signals obtained via an LOS/NLOS classification method (e.g., LOS/NLOS classification method of FIG. 7/8). For example, when LOS probability data is as shown in the example of FIG. 9B, the user device 920 may identify (initially identify) UWB signals having top four LOS probabilities (i.e., a UWB signal received from the second UWB anchor 912, a UWB signal received from the third UWB anchor 923, a UWB signal received from the fourth UWB anchor 914, and a UWB signal received from the fifth UWB anchor 925) from among LOS probabilities (p(LOS)) of six UWB signals obtained via the LOS/NLOS classification method. A cluster 1010 configured with UWB anchors that transmit the identified UWB signals may be as shown in FIG. 10B.

In operation 1002, the user device 920 may perform DL-TDoA positioning by using the identified (initially identified) UWB signals, and may obtain a location of the user device 920. The user device 920 may perform DL-TDoA positioning by using the identified UWB signals, and may calculate the location of the user device 920. For example, when the LOS probability data is as shown in the example of FIG. 9B, the user device 920 may perform DL-TDoA positioning by using the four identified UWB signals (i.e., the UWB signal received from the second UWB anchor 912, the UWB signal received from the third UWB anchor 923, the UWB signal received from the fourth UWB anchor 914, and the UWB signal received from the fifth UWB anchor 925), and may calculate the location of the user device 920. For a description of the operation of performing DL-TDoA positioning and calculating a position, refer to the descriptions that have been described with reference to FIGS. 4 and 5.

In operation 1003, the user device 920 may determine whether the obtained location is within the area of the cluster configured with the UWB anchors that transmit the identified UWB signals.

When the obtained location is within the area of the corresponding cluster, the user device 920 may determine the obtained location as a final location of the user device 920 in operation 1004.

When the obtained location is out of the area of the corresponding cluster, the user device 920 may additionally identify (or select) a UWB signal having a highest LOS probability among the remaining LOS probability (probabilities) in operation 1005. For example, as illustrated in FIG. 10B, when the obtained location is out of the area of the corresponding cluster, the user device 920 may additionally identify a UWB signal having a highest LOS probability among LOS probability (probabilities) remaining after excluding top four LOS probabilities from the six obtained LOS probabilities. For example, when the LOS probability data is as shown in the example of FIG. 9B, the user device 920 may additionally identify a UWB signal received from the first UWB anchor 913 and having a fifth highest LOS probability. A cluster 1020 configured with the UWB anchors that transmit the identified UWB signals including the additionally identified UWB signal may be as shown in FIG. 10C.

When a UWB signal is additionally identified, the user device 920 may perform DL-TDoA positioning using the reidentified UWB signals (i.e., the previously identified UWB signals and additionally identified UWB signal), and may obtain (re-obtain) a location of the user device 920 in operation 1006. For example, the user device 920 may perform DL-TDoA positioning by using the four previously identified UWB signals (i.e., the UWB signal received from the second UWB anchor 912, the UWB signal received from the third UWB anchor 923, the UWB signal received from the fourth UWB anchor 914, and the UWB signal received from the fifth UWB anchor 925) together with the additionally identified UWB signal received from the first UWB anchor 913, and may obtain (re-obtain) the location of the user device 920. Subsequently, in operation 1003, the user device 920 may determine whether the obtained (re-obtained) location is within an area of the cluster configured with the UWB anchors that transmit the identified UWB signals.

When the obtained location is within the area of the corresponding cluster, the user device 920 may determine the obtained (re-obtained) location as a final location of the user device 920 in operation 1004.

When the obtained (re-obtained) location is out of the area of the corresponding cluster, the user device 920 may proceed again with operations 1005, 1006, and 1003 in operation 1005.

In operation 1005, the user device 920 may additionally identify a UWB signal having a highest LOS probability from among the remaining LOS probability (probabilities). For example, as illustrated in FIG. 10C, when the obtained location is out of the area of the corresponding cluster, the user device 920 may additionally identify a UWB signal having a highest LOS probability among the LOS probability (probabilities) remaining after excluding top five LOS probabilities from the six obtained LOS probabilities. For example, when the LOS probability data is as shown in FIG. 9B, the user device 920 may additionally identify a UWB signal received from the sixth UWB anchor 916 and having a sixth highest LOS probability. A cluster 1030 configured with the UWB anchors that transmit the identified UWB signals may be as shown in the example of FIG. 10D.

In operation 1006, the user device 920 may perform DL-TDoA positioning using the reidentified UWB signals (i.e., the previously identified UWB signals and additionally identified UWB signal), and may obtain (re-obtain) a location of the user device 920. For example, the user device 920 may perform DL-TDoA positioning by using the five previously identified UWB signals (i.e., the UWB signal received from the second UWB anchor 912, the UWB signal received from the third UWB anchor 923, the UWB signal received from the fourth UWB anchor 914, the UWB signal received from the fifth UWB anchor 925, and the UWB signal received from the first UWB anchor 913) together with the additionally identified UWB signal received from the sixth UWB anchor 916, and may obtain (re-obtain) the location of the user device 920.

In operation 1003, the user device 920 may determine whether the obtained (re-obtained) location is within an area of the cluster configured with UWB anchors that transmit the identified UWB signals.

When the obtained (re-obtained) location is within the area of the corresponding cluster, the user device 920 may determine the obtained location as a final location of the user device 920 in operation 1004. For example, as illustrated in FIG. 10D, when the obtained location is within the area of the corresponding cluster, the user device 920 may determine the obtained location as the final location of the user device 920.

When the obtained (re-obtained) location is out of the area of the corresponding cluster, the user device 920 may additionally identify a UWB signal having a highest LOS probability among the remaining LOS probability (probabilities), and may proceed again with operations 1005, 1006, and 1003. Operations 1005, 1006, and 1003 may be performed iteratively until an obtained location is within an area of a corresponding cluster.

The method of performing DL-TDoA positioning of FIG. 10A may be advantageous in that convergence in location calculation is rapid. For example, in the above-described example, the location of the user device may be determined by performing the DL-TDoA positioning process three times. In addition, as the number of received UWB signals (or the number of UWB anchors that transmit UWB signals) is increased, the method of performing DL-TDoA positioning of FIG. 10A may provide a better performance than the method of performing DL-TDoA positioning described below.

In this instance, the method of performing DL-TDoA positioning of FIG. 10A may use a UWB signal received from a UWB anchor having a low LOS probability (or information (e.g., reception timestamp) obtained from the UWB signal) for DL-TDoA positioning.

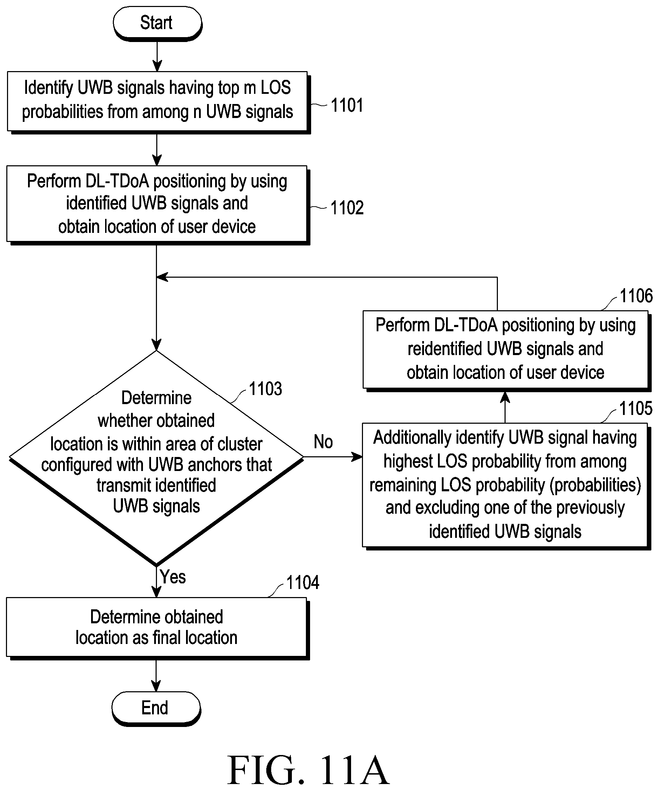

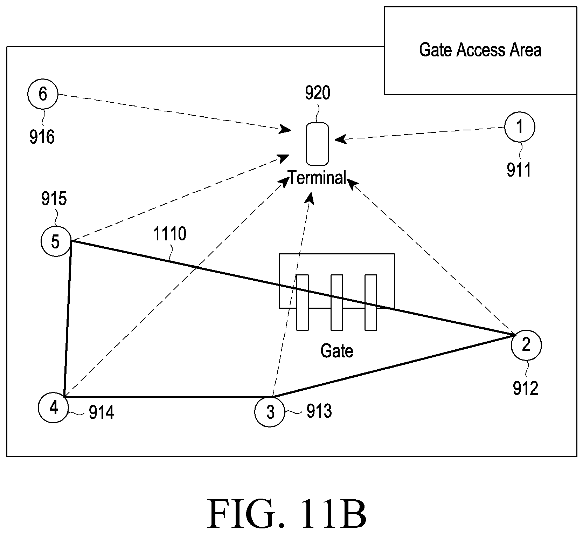

FIG. 11A is a flowchart illustrating a method of performing DL-TDoA positioning according to an embodiment of the disclosure. FIGS. 11B to 11D are diagrams illustrating examples of a cluster configured according to the method of performing DL-TDoA positioning of FIG. 11A.

Referring to FIG. 11A, in operation 1101, the user device (terminal) 920 may identify (or select) UWB signals having top m LOS probabilities among n UWB signals (m<n). The user device 920 may identify UWB signals having top m LOS probabilities among LOS probabilities (p(LOS)) for the n UWB signals obtained via an LOS/NLOS classification method (e.g., LOS/NLOS classification method of FIG. 7/8). For example, when LOS probability data is as shown in the example of FIG. 9B, the user device 920 may identify (initially identify) UWB signals having top four LOS probabilities (i.e., a UWB signal received from the second UWB anchor 912, a UWB signal received from the third UWB anchor 923, a UWB signal received from the fourth UWB anchor 914, and a UWB signal received from the fifth UWB anchor 925) from among LOS probabilities (p(LOS)) of six UWB signals obtained via the LOS/NLOS classification method. A cluster 1110 configured with the UWB anchors that transmit the identified UWB signals may be as shown in FIG. 11B.

In operation 1102, the user device 920 may perform DL-TDoA positioning by using the identified (initially identified) UWB signals, and may obtain a location of the user device 920. The user device 920 may perform DL-TDoA positioning by using the identified UWB signals, and may calculate the location of the user device 920. For example, when the LOS probability data is as shown in the example of FIG. 9B, the user device 920 may perform DL-TDoA positioning by using the four identified UWB signals (i.e., the UWB signal received from the second UWB anchor 912, the UWB signal received from the third UWB anchor 923, the UWB signal received from the fourth UWB anchor 914, and the UWB signal received from the fifth UWB anchor 925), and may calculate the location of the user device 920. For a description of the operation of performing DL-TDoA positioning and calculating a position, refer to the descriptions that have been described with reference to FIGS. 4 and 5.

In operation 1103, the user device 920 may determine whether the obtained location is within an area of the cluster configured with the UWB anchors that transmit the identified UWB signals.

When the obtained location is within the area of the corresponding cluster, the user device 920 may determine the obtained location as a final location of the user device 920 in operation 1104.

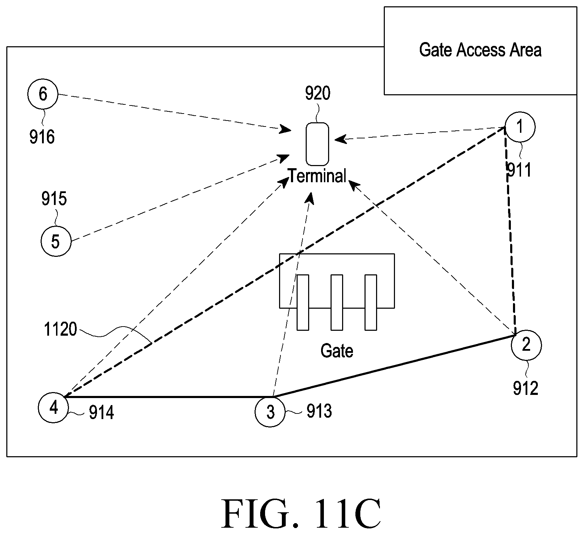

When the obtained location is out of the area of the corresponding cluster, the user device 920 may additionally identify (or select) a UWB signal having a highest LOS probability among the remaining LOS probability (probabilities), and may exclude one of the previously identified UWB signals. For example, as illustrated in FIG. 11B, when the obtained location is out of the area of the corresponding cluster, the user device 920 may additionally identify a UWB signal having a highest LOS probability from among the UWB signal(s) remaining after excluding the previously identified UWB signals, and may exclude a UWB signal having a lowest probability from among the previously identified UWB signals. For example, when the LOS probability data is as shown in the example of FIG. 9B, the user device 920 may additionally identify the UWB signal, having a fifth highest LOS probability and received from the first UWB anchor 913, and may exclude the UWB signal having a lowest LOS probability among the four initially identified UWB signals and received from the fifth UWB anchor 915. A cluster 1120 configured with the UWB anchors that transmit the reidentified UWB signals as described above may be as shown in FIG. 11C.

When a UWB signal is additionally identified and one of the previously identified UWB signals is excluded, the user device 920 may perform DL-TDoA positioning using the four reidentified UWB signals (i.e., the initially identified UWB signals excluding one of them and additionally identified UWB signal), and may obtain (re-obtain) a location of the user device 920 in operation 1106. For example, the user device 920 may perform DL-TDoA positioning by using the three initially identified UWB signals (i.e., the UWB signal received from the second UWB anchor 912, the UWB signal received from the third UWB anchor 923, and the UWB signal received from the fourth UWB anchor 914) remaining after excluding one (e.g., the UWB signal received from the fifth UWB anchor 915) together with the additionally identified UWB signal (e.g., the UWB signal received from the first UWB anchor 913), and may obtain (re-obtain) the location of the user device 920. Subsequently, in operation 1103, the user device 920 may determine whether the obtained (re-obtained) location is within an area of the cluster configured with UWB anchors that transmit the identified UWB signals.

When the obtained (re-obtained) location is within the area of the corresponding cluster, the user device 920 may determine the obtained (re-obtained) location as a final location of the user device 920 in operation 1104.

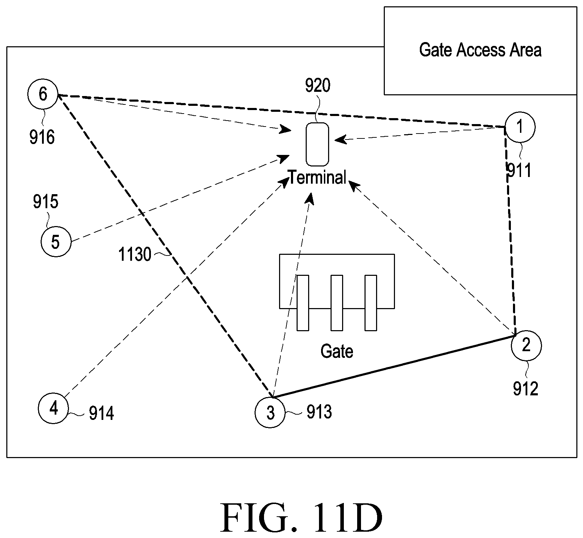

When the obtained (re-obtained) location is out of the area of the corresponding cluster, the user device 920 may additionally identify (or select) a UWB signal having a highest LOS probability among the remaining LOS probability (probabilities), and may exclude one of the previously identified UWB signals in operation 1105. For example, as illustrated in FIG. 11C, when the obtained location is out of the area of the corresponding cluster, the user device 920 may additionally identify a UWB signal having a highest LOS probability from among the UWB signal(s) remaining after excluding the previously identified UWB signals, and may exclude a UWB signal having a lowest probability from among the previously identified UWB signals. For example, when the LOS probability data is as shown in the example of FIG. 9B, the user device 920 may additionally identify a UWB signal, having a sixth highest LOS probability and received from the sixth UWB anchor 916, and may exclude the UWB signal, received from the fourth UWB anchor 914 and having a lowest LOS probability among the initially identified UWB signals remaining after excluding one (e.g., the UWB signal received from the second UWB anchor 912, the UWB signal received from the third UWB anchor 923, and the UWB signal received from the fourth UWB anchor 914). A cluster 1130 configured with the UWB anchors that transmit the reidentified UWB signals as described above may be as shown in FIG. 11D.

When a UWB signal is additionally identified and one of the previously identified UWB signals is excluded, the user device 920 may perform DL-TDoA positioning using the four reidentified UWB signals (i.e., two initially identified UWB signals, the previously additionally identified UWB signal, and a currently additionally identified UWB signal), and may obtain (re-obtain) a location of the user device 920 in operation 1106. For example, the user device 920 may perform DL-TDoA positioning by using the two initially identified UWB signals (i.e., the UWB signal received from the second UWB anchor 912 and the UWB signal received from the third UWB anchor 923) and the previously additionally identified UWB signal received from the first UWB anchor 911, together with the currently additionally identified UWB signal received from the sixth UWB anchor 916, and may obtain (re-obtain) the location of the user device 920. Subsequently, in operation 1103, the user device 920 may determine whether the obtained (re-obtained) location is within an area of the cluster configured with the UWB anchors that transmit the identified UWB signals.

When the obtained (re-obtained) location is within the area of the corresponding cluster, the user device 920 may determine the obtained location as a final location of the user device 920 in operation 1104. For example, as illustrated in FIG. 11D, when the obtained location is within the area of the corresponding cluster, the user device 920 may determine the obtained location as the final location of the user device 920.

When the obtained (re-obtained) location is out of the area of the corresponding cluster, the user device 920 may additionally identify a UWB signal having a highest LOS probability among the remaining LOS probability (probabilities), may exclude one of the previously identified UWB signals, and may proceed again with operations 1105, 1106, and 1103. Operations 1105, 1106, and 1103 may be performed iteratively until an obtained location is within an area of a corresponding cluster.

When the number of iterations of operations 1105, 1106, and 1103 reaches C(n,4), the user device 920 may stop iteration and may perform DL-TDoA positioning by using UWB signals received from the whole UWB anchors, and may calculate the location of the user device.

In the case of the embodiment of FIG. 11A, as operations 1105, 1106, and 1103 are iterated, when all of the four initially identified UWB signals are excluded, the user device 920 may perform operation 1105 by excluding one of four UWB signals that are additionally identified after the four initially identified UWB signals.

According to the method of performing DL-TDoA positioning of FIG. 11A, when one UWB anchor (or one UWB signal) is added, one UWB anchor having a low LOS probability is excluded. Accordingly, when compared to the method of performing DL-TDoA positioning of FIG. 10A, an optimal message combination (or UWB signal/UWB anchor combination) may be obtained and a location is calculated. This may increase the accuracy of location calculation.

In this instance, similar to the method of performing the DL-TDoA positioning of FIG. 10A, the method of performing DL-TDoA positioning of FIG. 11A may use a UWB signal received from a UWB anchor having a low LOS probability (or information (e.g., reception timestamp) obtained from the UWB signal) for DL-TDoA positioning. In addition, according to the method of performing the DL-TDoA positioning of FIG. 11A, as the number of UWB anchors is increased, a probability of the occurrence of calculating C(n,4) is increased.

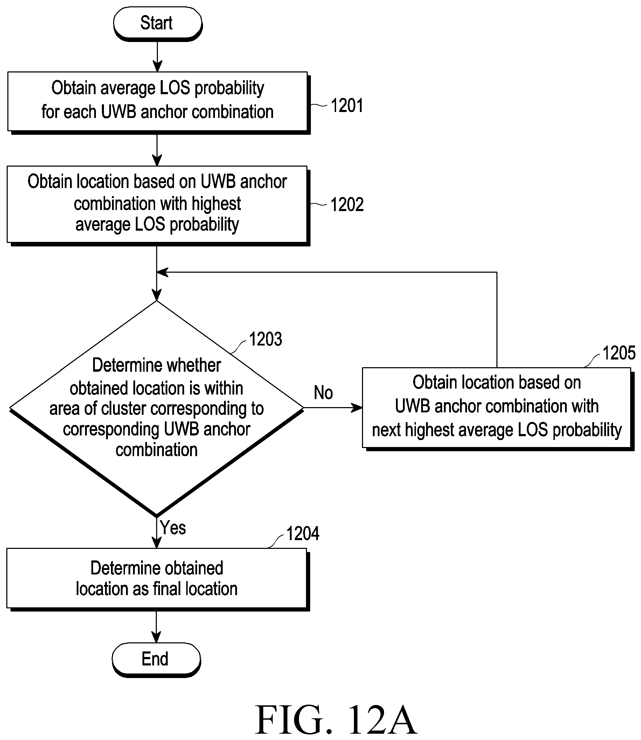

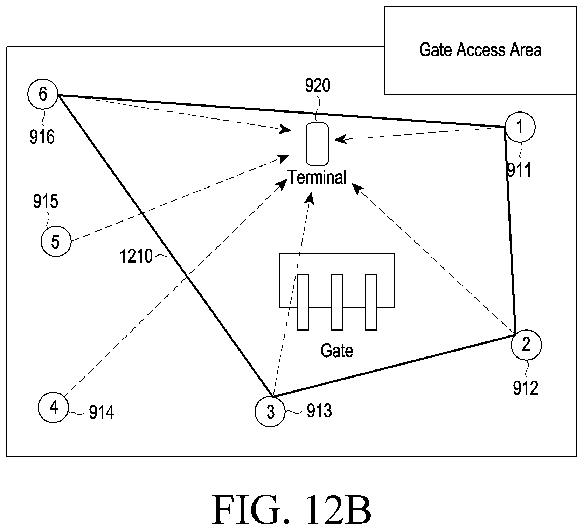

FIG. 12A is a flowchart illustrating a method of performing DL-TDoA positioning according to an embodiment of the disclosure. FIG. 12B is a diagram illustrating an example of a cluster configured according to a method of performing DL-TDoA positioning of FIG. 12A.

Referring to FIG. 12A, in operation 1201, the user device (terminal) 920 may calculate an average LOS probability for each UWB anchor combination. The UWB anchor combination may be a combination obtained by selecting m (e.g., 4) UWB anchors from among n (e.g., 6) UWB anchors. The UWB anchor combination may correspond to a cluster. The average LOS probability for the UWB anchor combination may be an average of LOS probabilities of UWB signals received from the UWB anchors belonging to the corresponding UWB anchor combination.

For example, when the LOS probability data is as shown in the example of FIG. 9B, average LOS probability data for each UWB anchor combination may be as shown in Table 4 below.

**[Table 4]**

| **Com.** | **average p(LOS)** |
|---|---|
| (1,2,3,6) | 0.5975 |
| (1,2,4,6) | 0.525 |
| (1,2,5,6) | 0.4725 |
| (1,3,4,6) | 0.5325 |
| (1,3,5,6) | 0.48 |
| (1,4,5,6) | 0.4075 |

For example, in Table 4, (1, 2, 3, 6) denotes a UWB anchor combination of the first UWB anchor 911, the second UWB anchor 912, the third UWB anchor 913, and the sixth UWB anchor 916, and an average LOS probability (average p(LOS)) for (1, 2, 3, 6) may be 0.5975(=(0.33+0.91+0.94+0.21)/4) that is an average value of an LOS probability (=0.33) for a UWB signal received from the first UWB anchor 911, an LOS probability (=0.91) for a UWB signal received from the second UWB anchor 912, an LOS probability (=0.94) for a UWB signal received from the third UWB anchor 913, and an LOS probability (=0.21) for a UWB signal received from the sixth UWB anchor 916.

In operation 1202, the user device 920 may obtain the location of the user device 920 based on a UWB anchor combination with a highest average LOS probability. For example, the user device 920 may perform DL-TDoA positioning by using a UWB signal received from each UWB anchor included in the UWB anchor combination with the highest average LOS probability, and may calculate the location of the user device 920. For example, when the average LOS probability data is as shown in the example of Table 4, the user device 920 may perform DL-TDoA positioning by using the UWB signal received from the first UWB anchor 911, the UWB signal received from the second UWB anchor 912, the UWB signal received from the third UWB anchor 913, and the UWB signal received from the sixth UWB anchor 916 included in the UWB anchor combination of (1, 2, 3, 6), and may calculate the location of the user device 920. For a description of the operation of performing DL-TDoA positioning and calculating a position, refer to the descriptions that have been described with reference to FIGS. 4 and 5. A cluster 1210 corresponding to the UWB anchor combination with the highest average LOS probability may be as shown in the example of FIG. 12B.

In operation 1203, the user device 920 may determine whether the obtained location is within the cluster of the corresponding UWB anchor combination.

When the obtained location is within the cluster of the corresponding UWB anchor combination, the user device 920 may determine the obtained location as a final location of the user device 920 in operation 1204. For example, as illustrated in FIG. 12B, when the obtained location is within the area of the corresponding cluster, the user device 920 may determine the obtained location as the final location of the user device 920.

When the obtained location is out of the cluster of the corresponding UWB anchor combination, the user device 920 may obtain (re-obtain) a location of the user device 920 based on a UWB anchor combination with a next highest average LOS probability in operation 1205. For example, the user device 920 may perform DL-TDoA positioning by using a UWB signal received from each UWB anchor included in the UWB anchor combination with the next highest average LOS probability, and may calculate the location of the user device 920. For example, when the average LOS probability data is as shown in the example of Table 4, the user device 920 may perform DL-TDoA positioning by using the UWB signal received from the first UWB anchor 911, the UWB signal received from the third UWB anchor 913, the UWB signal received from the fourth UWB anchor 914, and the UWB signal received from the sixth UWB anchor 916 included in the UWB anchor combination of (1, 3, 4, 6), and may calculate the location of the user device 920. Subsequently, in operation 1203, the user device 920 may determine whether the obtained (re-obtained) location is within an area of a cluster corresponding to the corresponding UWB anchor combination. When the obtained location is within the cluster of the corresponding UWB anchor combination, the user device 920 may determine the obtained location as a final location of the user device 920 in operation 1204. When the obtained location is out of the area of the cluster of the corresponding UWB anchor combination, the user device 920 may perform operations 1205 and 1203 again. As described above, the user device may iteratively perform operations 1205 and 1203 with respect to a UWB anchor combination with a next highest average LOS probability until the obtained location is within an area of a cluster of the corresponding UWB anchor combination.

According to an embodiment, when a plurality of UWB anchor combinations (i.e., anchor combinations in an LOS environment) with average LOS probabilities greater than or equal to a first value (e.g., 0.5) exist, the user device 920 may calculate a location of the user device 920 for each of the plurality of UWB anchor combinations and may average the calculated locations so as to determine a location of the user device 920. For example, when the average LOS probability data is as shown in Table 4 below, the user device 920 may calculate a location of the user device 920 for each of the (1, 2, 3, 6) UWB anchor combination, the (1, 2, 4, 6) UWB anchor combination, and the (1, 3, 4, 6) UWB anchor combination of which average LOS probabilities are greater than or equal to 0.5, and may average the determined locations so as to determine the location of the user device 920. In this instance, for a description of the location calculation for each UWB anchor combination, the above description may be served as a reference. For example, the location associated with the (1, 2, 3, 6) UWB anchor combination may be calculated by performing DL-TDoA positioning using the UWB signal received from the first UWB anchor 911, the UWB signal received from the second UWB anchor 912, the UWB signal received from the third UWB anchor 913, and the UWB signal received from the sixth UWB anchor 916 included in the (1, 2, 3, 6) UWB anchor combination.

The method of performing DL-TDoA positioning of FIG. 12A may calculate a location by obtaining an optimal UWB anchor combination message combination (or UWB signal/UWB anchor combination). This may increase the accuracy of location calculation.

The method of performing DL-TDoA positioning of FIG. 12A needs to calculate average LOS probabilities of all UWB anchor combinations, and thus the amount of calculation may be increased when a sufficiently large number of UWB anchor combinations is used.

Based on the number of UWB anchors (or the number of UWB messages received from UWB anchors), the user device may determine a method to use from among the method (first method) of performing DL-TDoA positioning of FIG. 10A, the method (second method) of performing DL-TDoA positioning of FIG. 11A, and the method (third method) of performing DL-TDoA positioning of FIG. 12A.

For example, when the number of UWB anchors (or the number of UWB messages received from the UWB anchors) is greater than or equal to a predetermined number, the user device may use the first method. This is because the first method may provide quick computation processing and convergence when compared to the second method and the third method.

For example, when the number of UWB anchors (or the number of UWB messages received from the UWB anchors) is less than a predetermined number, the user device may use the second method or the third method. When the number of UWB anchors (or the number of UWB messages received from UWB anchors) is relatively small, the second method and the third method are advantageous for obtaining an optimal message combination (or UWB anchor combination) than the first method.

In addition, unless they are contradictory, a combination of the various embodiments or the above-described various methods (e.g., first method, second method, third method) of performing DL-TDoA positioning may be available.

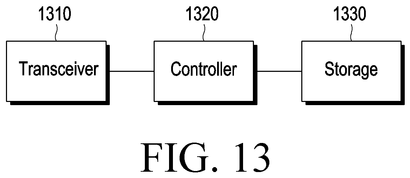

FIG. 13 is a diagram illustrating a structure of an electronic device according to an embodiment of the disclosure.

In the embodiment of FIG. 13, the electronic device may be a user's electronic device (user device/terminal).

Referring to FIG. 13, the electronic device may include a transceiver 1310, a controller 1320, and a storage 1330. In the disclosure, a controller may be defined as a circuit or application-specific integrated circuit or at least one processor.

The transceiver 1310 may perform signal transmission or reception with another network entity. The transceiver 1310, for example, may perform data transmission or reception for commissioning.

The controller 1320 may control the overall operation of the electronic device according to the embodiments of the disclosure. For example, the controller 1320 may control an inter-block signal flow in order to perform operations according to the described flowchart. Specifically, the controller 1320, for example, may control the operation of the electronic device which have been described with reference to FIGS. 1 to 12.

According to an embodiment, based on line of sight (LOS) probabilities of a plurality of received ultra-wideband (UWB) signals, the controller 1320 may identify a predetermined number of UWB signals from among the plurality of received UWB signals.

According to an embodiment, the controller 1320 may obtain a location of the electronic device by using the identified UWB signals.

According to an embodiment, the controller 1320 may determine whether the obtained location is within an area of a cluster configured with UWB anchors that transmit the identified UWB signals.

According to an embodiment, when the obtained location is within the area of the cluster, the controller 1320 may determine the obtained location as a final location of the electronic device.

According to an embodiment, each of the plurality of received UWB signals may include a UWB message for downlink-time difference of arrival (DL-TDoA) positioning.

According to an embodiment, the controller 1320 may identify UWB signal with top four LOS probabilities, as the predetermined number of UWB signals.

According to an embodiment, when the obtained location is out of the area of the cluster, the controller 1320 may additionally identify a UWB signal having a highest LOS probability from among UWB signals remaining after excluding the UWB signals having top four LOS probabilities from the plurality of received UWB signals, and may obtain a location of the electronic device by using the UWB signals having top four LOS probabilities and the additionally identified UWB signal.

According to an embodiment, when the obtained location is out of the area of the cluster, the controller 1320 may additionally identify a UWB signal having a highest LOS probability from among UWB signals remaining after excluding the UWB signals having top four LOS probabilities from the plurality of received UWB signals, and may exclude a UWB signal having a lowest LOS probability from the UWB signals having top four LOS probabilities, and may obtain a location of the electronic device by using the three UWB signals remaining after excluding the UWB signal having the lowest LOS probability from the UWB signals having top four LOS probabilities, and the additionally identified UWB signal.

According to an embodiment, based on the LOS probabilities, the controller 1320 may calculate average LOS probabilities for all UWB anchor combinations configurable based on the plurality of received UWB signals, and may identify UWB signals received from UWB anchors included in a UWB anchor combination with a highest average LOS probability, as the predetermined number of UWB signals. Here, each UWB anchor combination may include four UWB anchors, and the average LOS probability for each UWB anchor combination is an average of LOS probabilities of the four UWB anchors included in the corresponding UWB anchor combination.

According to an embodiment, when the obtained location is out of the area of the cluster, the controller 1320 may identify UWB signals received from UWB anchors included in a UWB anchor combination with a next highest average LOS probability, as the predetermined number of UWB signals, and may obtain a location of the electronic device by using the identified UWB signals.

According to an embodiment, the LOS probabilities for the plurality of received UWB signals may be obtained based on effective channel impulse response (CIR) data corresponding to a corresponding UWB signal by using a trained convolutional neural network (CNN) model.

According to an embodiment, the UWB message may be a poll DTM message transmitted by an initiator anchor, a response downlink DTM transmitted by a responder anchor, or a final DTM transmitted by the initiator anchor.

The storage 1330 may store at least one piece of information among information transmitted or received via the transceiver 1310 and information produced by the controller 1320. For example, the storage 1330, for example, may store information and data needed for determining a location, which has been described with reference to FIGS. 1 to 12.

In the above-described detailed embodiments of the disclosure, an element included in the disclosure is expressed in the singular or the plural according to presented detailed embodiments. However, the singular form or plural form is selected appropriately to the presented situation for the convenience of description, and the disclosure is not limited by elements expressed in the singular or the plural. Therefore, either an element expressed in the plural may also include a single element or an element expressed in the singular may also include multiple elements.

Although specific embodiments have been described in the detailed description of the disclosure, it will be apparent that various modifications and changes may be made thereto without departing from the scope of the disclosure. Therefore, the scope of the disclosure should not be defined as being limited to the embodiments set forth herein, but should be defined by the appended claims and equivalents thereof.

## Claims

1. A method of an electronic device, the method comprising:
identifying a predetermined number of ultra-wideband (UWB) signals from among a plurality of received UWB signals, based on line of sight (LOS) probabilities for the plurality of received UWB signals;
obtaining a location of the electronic device by using the identified UWB signals;
determining whether the obtained location is within an area of a cluster configured with UWB anchors which transmit the identified UWB signals; and
in case that the obtained location is within the area of the cluster, determining the obtained location as a final location of the electronic device,
wherein each of the plurality of received UWB signals comprises a UWB message for downlink-time difference of arrival (DL-TDoA) positioning.

2. The method of claim 1, wherein the identifying of the predetermined number of UWB signals comprises:
identifying UWB signals having top four LOS probabilities, as the predetermined number of UWB signals.

3. The method of claim 2, further comprising:
in case that the obtained location is out of the area of the cluster, additionally identifying a UWB signal having a highest LOS probability from among UWB signals remaining after excluding the UWB signals having top four LOS probabilities from the plurality of received UWB signals; and
obtaining a location of the electronic device by using the UWB signals having top four LOS probabilities and the additionally identified UWB signal.

4. The method of claim 2, further comprising:
in case that the obtained location is out of the area of the cluster, additionally identifying a UWB signal having a highest LOS probability from among UWB signals remaining after excluding the UWB signals having top four LOS probabilities from the plurality of received UWB signals, and excluding a UWB signal having a lowest LOS probability from the UWB signals having top four LOS probabilities; and
obtaining a location of the electronic device by using the three UWB signals remaining after excluding the UWB signal having the lowest LOS probability from the UWB signals having top four LOS probabilities, and the additionally identified UWB signal.

5. The method of claim 1, wherein the identifying of the predetermined number of UWB signals comprises:
based on the LOS probabilities, calculating average LOS probabilities for all UWB anchor combinations configurable based on the plurality of received UWB signals; and
identifying UWB signals received from UWB anchors included in a UWB anchor combination with a highest average LOS probability, as the predetermined number of UWB signals,
wherein each UWB anchor combination comprises four UWB anchors, and the average LOS probability is an average of LOS probabilities of the four UWB anchors included in the corresponding UWB anchor combination.

6. The method of claim 4, further comprising:
in case that the obtained location is out of the area of the cluster, identifying UWB signals received from UWB anchors included in a UWB anchor combination with a next highest average LOS probability, as the predetermined number of UWB signals; and
obtaining a location of the electronic device by using the identified UWB signals.

7. The method of claim 1, wherein the LOS probabilities for the plurality of received UWB signals are obtained based on effective channel impulse response (CIR) data corresponding to a corresponding UWB signal by using a trained convolutional neural network (CNN) model.

8. The method of claim 1, wherein the UWB message is a poll DTM message transmitted by an initiator anchor, a response downlink time difference of arrival message (DTM) transmitted by a responder anchor, or a final DTM transmitted by the initiator anchor.

9. An electronic device comprising:
a transceiver; and
at least one processor connected to the transceiver,
wherein the at least one processor is configured to:
identify a predetermined number of ultra-wideband (UWB) signals from among a plurality of received UWB signals, based on line of sight (LOS) probabilities for the plurality of received ultra-wideband (UWB) signals;
obtain a location of the electronic device by using the identified UWB signals;
determine whether the obtained location is within an area of a cluster configured with UWB anchors which transmit the identified UWB signals; and
in case that the obtained location is within the area of the cluster, determine the obtained location as a final location of the electronic device,
wherein each of the plurality of received UWB signals comprises a UWB message for downlink-time difference of arrival (DL-TDoA) positioning.

10. The electronic device of claim 9, wherein the at least one processor is further configured to identify UWB signals having top four LOS probabilities, as the predetermined number of UWB signals.

11. The electronic device of claim 10, wherein the at least one processor is further configured to:
in case that the obtained location is out of the area of the cluster, additionally identify a UWB signal having a highest LOS probability from among UWB signals remaining after excluding the UWB signals having top four LOS probabilities from the plurality of received UWB signals; and
obtain a location of the electronic device by using the UWB signals having top four LOS probabilities and the additionally identified UWB signal.

12. The electronic device of claim 10, wherein the at least one processor is further configured to:
in case that the obtained location is out of the area of the cluster, additionally identify a UWB signal having a highest LOS probability from among UWB signals remaining after excluding the UWB signals having top four LOS probabilities from the plurality of received UWB signals, and excluding a UWB signal having a lowest LOS probability from the UWB signals having top four LOS probabilities; and
obtain a location of the electronic device by using three UWB signals remaining after excluding the UWB signal having the lowest LOS probability from the UWB signals having top four LOS probabilities, and the additionally identified UWB signal.

13. The electronic device of claim 9, wherein the at least one processor is further configured to:
calculate, based on the LOS probabilities, average LOS probabilities for all UWB anchor combinations configurable based on the plurality of received UWB signals; and
identify UWB signals received from UWB anchors included in a UWB anchor combination with a highest average LOS probability, as the predetermined number of UWB signals,
wherein each UWB anchor combination comprises four UWB anchors, and the average LOS probability is an average of LOS probabilities for the four UWB anchors included in the corresponding UWB anchor combination.

14. The electronic device of claim 13, wherein the at least one processor is further configured to:
in case that the obtained location is out of the area of the cluster, identify UWB signals received from UWB anchors included in a UWB anchor combination with a next highest average LOS probability, as the predetermined number of UWB signals; and
obtain a location of the electronic device by using the identified UWB signals.

15. The electronic device of claim 9, wherein the LOS probabilities for the plurality of received UWB signals are obtained based on effective channel impulse response (CIR) data corresponding to a corresponding UWB signal by using a trained convolutional neural network (CNN) model, and
wherein the UWB message is a poll downlink time difference of arrival message (DTM) transmitted by an initiator anchor, a response DTM message transmitted by a responder anchor, or a final DTM transmitted by the initiator anchor.
